# EUROPÄISCHE PATENTSCHRIFT

(11) **EP 2 538 347 B1**
(45) Veröffentlichungstag und Bekanntmachung des Hinweises auf die Patenterteilung: **14.08.2019**
(21) Anmeldenummer: 10011351.3
(22) Anmeldetag: 20.11.2004
(51) Int. Cl.: G06F 16/904, G06F 16/36

(54) **Datenverarbeitungssystem und -vorrichtung**
Data processing system and device
Système et dispositif de traitement de données

(30) Priorität: 22.11.2003 DE 10354633
(43) Veröffentlichungstag der Anmeldung: 26.12.2012
(62) Teilanmeldung aus: 04803203.1
(73) Patentinhaber: IQser IP AG, 8303 Bassersdorf (CH)
(72) Erfinder: Wurzer, Jörg, Dr., 42855 Remscheid (DE); Magnus, Christian, 60488 Frankfurt (DE)
(74) Vertreter: Ring & Weisbrodt

(56) Entgegenhaltungen:
- EP-A- 1 160 688
- EP-A- 1 211 613
- WO-A2-01/98949
- US-A- 5 446 891
- US-A- 5 696 916
- US-A1- 2002 101 458
- US-A1- 2003 076 306
- US-A1- 2003 117 436
- US-B1- 6 285 999
- Apple Computer Inc.: "iPod Benutzerhandbuch (deutsch, 2. Gen)", Cupertino, U.S., 21. Oktober 2002 (2002-10-21), Seiten 1-35, XP55043308, Gefunden im Internet: URL:http://support.apple.com/de_DE/manuals /#ipod [gefunden am 2012-11-07]

## Beschreibung

Die vorliegende Erfindung betrifft ein Datenverarbeitungssystem zur dynamischen Erfassung von gewichteten Zusammenhängen zwischen Informationen repräsentierenden Daten in wenigstens einem Datenbestand.

Systeme und Vorrichtungen zur elektronischen Verarbeitung von Daten sind im Stand der Technik in zahlreichen Ausgestaltungen bekannt. Dabei werden Inhalte als Informationen repräsentierende Daten eines Datenbestandes maschinell verarbeitet, insbesondere um Anwendern als technisches Hilfsmittel zur Lösung von Aufgaben zur Verfügung gestellt zu werden oder zu dienen. Datenbestände im Sinne der vorliegenden Erfindung sind einfache, universell nutzbare, persistente Datenobjekte die insbesondere wie Dateien und/oder Dokumente in Betriebssystemen oder Datenbanken, Struktur-, Inhalts- und bedarfsweise Verwaltungsinformationen enthalten. In den verschiedenen Datenverarbeitungssystemen sind die Datenbestände dem Datenverarbeitungssystem über wenigstens eine Datenquelle, in der Regel einen im Datenverarbeitungssystem vorhandenen oder über ein Kommunikationsnetzwerk anschließbaren bzw. verbindbaren Datenträger, beispielsweise einer Festplatte oder dergleichen Datenaufzeichnungsmittel, zugänglich.

Datenverarbeitungssysteme und/oder -vorrichtungen der eingangs genannten Art finden im Rahmen von Suchanwendungen bzw. -routinen, beispielsweise seitens Betriebssystemen und/oder seitens sogenannter Suchmaschinen, sowie im Rahmen der Organisation und Bereitstellung bzw. Auslieferung von Informationen Verwendung.

Betriebssysteme arbeiten mit einer hierarchischen Ordnung von Dateien, beispielsweise in ihrem sogenannten Filesystem. Dabei sind die Dateien als Datenbestand in einer Baumstruktur in Verzeichnissen eingeordnet. Eine Navigation in den Dateien erfolgt in der Regel entlang einer aristotelischen Logik über die Namen der einzelnen Verzeichnisse bis hin zu einer Datei. Die Navigation kann dabei mehrere Schritte umfassen und beinhaltet ferner das Problem einer eindeutigen Zuordnung. Darüber hinaus wird bei Betriebssystemen die Verwaltung von Dateien von der Verwaltung von Daten, welche ausschließlich über auf Datenbanken oder dateibasierende Datenstrukturen, wie beispielsweise XML, zugreifende Anwendungsprogramme zugänglich sind, getrennt. Üblicherweise erfolgt die Trennung dabei entsprechend der technischen Implementation bzw. Realisierung der Persistenz der jeweiligen Daten.

In datenbankgestützten Anwendungen kommen bisher relationale Datenbanken zum Einsatz, die statische Verknüpfungen von mit Daten versehenen Tabellen verwalten. Aufgrund der verwendeten statischen Verknüpfungen in den seitens Suchmaschinen verwalteten Tabellen, sind Änderungen in den Datenbeständen nicht bzw. nur eingeschränkt und verzögert erfassbar. Die Auswertung bzw. Verwendung der Daten muss vorausschauend festgelegt werden.

Suchmaschinen ermöglichen Anwendern in der Regel nur Datenbestände nach Stichwörtern bzw. nach einer booleschen Kombination von Stichwörtern zu durchsuchen. Präzise Suchanfragen wie beispielsweise der Aufruf von Rechnungen oder dergleichen aus einem bestimmten Zeitraum oder dergleichen Abfragen sind nicht möglich.

Datenverarbeitungssysteme arbeiten darüber hinaus in der Regel mit einer statischen - das heißt fest vorgegebenen - hierarchisch strukturierten Menüstruktur, die dem Anwender eine Auswahl von möglichen Funktionen zur Bedienung des Datenverarbeitungssystems bereitstellen. Bei Betriebssystemen, beispielsweise bei MacOS X der Firma Apple, werden ferner sogenannte Kontextmenüs verwendet. Dabei handelt es sich ebenfalls um hierarchisch strukturierte Menüstrukturen, die jedoch in Abhängigkeit der installierten Anwendungsprogramme wenigstens teilweise um entsprechende Menüpunkte zum Starten bzw. Aufrufen einzelner Anwendungsprogramme und/oder von Funktionalitäten derselben ergänzbar sind. Abgesehen von der Ergänzbarkeit der Menüstrukturen sind diese in ihrer Nutzung dennoch statisch hierarchisch strukturiert. Die bei den Datenverarbeitungssystemen bisher gegebene statisch hierarchische Strukturierung von Menüstrukturen kann somit Nutzungsvorlieben eines Anwenders nicht bzw. nur bedingt nachkommen. Eine Berücksichtigung des jeweiligen Benutzungskontextes seitens der Menüstrukturen, wobei insbesondere die Menüpunkte in einem Menü angeboten werden, die im Kontext der Situation bzw. der aufgerufenen Inhalte Sinn macht bzw. sinnvoll ist, ist nicht möglich, insbesondere nicht aufgrund der statisch hierarchischen Strukturierung der Menüs.

Die Synchronisation von Informationen repräsentierenden Daten in Datenbeständen zwischen verschiedenen die Datenbestände gemeinsam nutzenden Datenverarbeitungsvorrichtungen ist - insbesondere angesichts der zunehmenden Verbreitung von mobil nutzbaren Datenverarbeitungsvorrichtungen wie sogenannten PDA's (PDA: Personal Digital Assistant) - ein wichtiger Bestandteil von Datenverarbeitungssystemen und ist beispielsweise in Form von sogenannten PIM-Systemen (PIM: Personal Information Management) in Datenverarbeitungssystemen integriert . Die Funktionalität der Synchronisation ist dabei bisher auf eine rein manuelle Auswahl von zu synchronisierenden Informationen beschränkt. Ein Anwender kann dabei beispielsweise durch manuelle Eingabe lediglich auswählen, welche bzw. welchen Teil seiner seitens des Datenverarbeitungssystems verwalteten Kontaktadressen er synchronisieren will. Eine nähere bzw. detailreichere Spezifizierung hinsichtlich einer inhaltlichen Beschränkung der zu synchronisierenden Informationen ist nicht möglich, insbesondere nicht als automatisierter Vorgang, der sich selbstständig dem Bedarf des Anwenders anpasst.

Bei Datenverarbeitungsvorrichtungen, insbesondere mobil nutzbaren Datenverarbeitungsvorrichtungen wie sogenannten PDA's (PDA: Personal Digital Assistant) oder Mobilfunktelefonen, sind die im Rahmen der Nutzung von Datenverarbeitungssystemen gegebenen Möglichkeiten zur Bedienungssteuerung und/oder zur Eingabe von Informationen repräsentierenden Daten (Inhalten) beschränkt, unkomfortabel und schwierig. Bei mobil nutzbaren Datenverarbeitungsvorrichtungen wie PDA's, Mobilfunktelefonen oder dergleichen mobilen Endgeräten werden für die Bedienung derselben und/oder die Eingabe von Inhalten Tastaturen mit verschiedenen Bedienelementen, verwendet. Üblich ist eine ein von Telefonen her bekannte Tastatur mit zwölf Tasten, die durch sogenanntes Multi-Tapping zur Eingabe von Ziffern und/oder Zeichen nutzbar sind, und mit wenigstens zwei weiteren Tasten, die für eine Steuerung durch und/oder Auswahl von auf einem als Ausgabeeinheit dienenden Display angezeigter listenartiger Auswahl- bzw. Handlungsoptionen dienen. Die Bedienungs- und/oder Eingabehandhabung von insbesondere mobil nutzbaren Datenverarbeitungsvorrichtungen ist insoweit umständlich und aufwendig.

Die EP 1 211 613 A2 offenbart ein Datenverarbeitungssystem zur Visualisierung bzw. Wiedergabe von Zusammenhängen zwischen verzeichnisbasierten Objekten. Die Visualisierung von Zusammenhängen zwischen den verzeichnisbasierten Objekten erfolgt mit multiplen Hierarchien unter Verwendung von expliziten Bezeichnern (Identifier), welche durch Objektattribute gegeben sind. Die Hierarchien selbst repräsentieren dabei auf Objektattributwerten basierende Zusammenhänge zwischen den Objekten. Ferner liegen die einen Zusammenhang darstellenden Objektattributwerte als auch die entsprechenden Objektattribute bei dem Datenverarbeitungssystem gemäß der EP 1 211 613 A2 bereits vor, das heißt sind bereits vor der Erzeugung der Hierarchien erfasst.

Die den Bereich relationaler Datenbanken betreffende EP 1 160 688 A2 offenbart ein Verfahren zum automatischen Verknüpfen von Datensätzen aus zumindest einer Datenquelle. Dabei werden Datensätze zunächst erfasst. Dann wird im Rahmen einer Analyse der erfassten Datensätze anhand von innerhalb der Datensätze enthaltenen Daten zumindest eine Zuordnungsinformation bestimmt. Anschließend wird auf Grundlage der Zuordnungsinformation zumindest eine Verknüpfungsinformation erzeugt, die schließlich dem Datensatz ergänzend als Annotation zugeführt wird. Insofern wird bei der EP 1 160 688 A2 die Zuordnungsinformation statisch bestimmt und der Datensatz selbst durch Ergänzung bzw. Annotation um die Verknüpfungsinformation verändert.

Die US 5,446,891 offenbart ein Datenverarbeitungssystem, bei dem in einem Hypermedium enthaltene Verknüpfungen (Links) mittels eines Anwenderprofils gewichtet und die gewichteten Verknüpfungen (Links) wiedergegeben werden. Mit dem Anwenderprofil werden dabei Ziele und Interessen des Anwenders berücksichtigt. Die Verknüpfungen (Links) in dem Hypermedium selbst sind dabei bereits vorhanden, das heißt von dem Autor des Hypermediums vorher bereits festgelegt. Zur Gewichtung der Verknüpfungen (Links) des Hypermediums mittels eines Anwenderprofils arbeitet das Datenverarbeitungssystem gemäß der US 5,446,891 mit Matrizen, die die vorhandenen Verknüpfungen (Links) des Hypermediums repräsentieren und nach dem jeweiligen Interessenfokus des Anwenders gewichten. Die Berechnung der Gewichtung der Verknüpfungen (Links) in den Matrizen der Nutzerprofile erfolgt dabei mit einer Mittelwerte bildenden Formel.

Die US 6,285,999 B1 offenbart ein Verfahren zur Bewertung von Webseiten mit dem Ziel der Relevanzbeurteilung derselben. Die US 6,285,999 B1 macht dabei von dem Konzept der sogenannten Link-Popularität gebrauch, wobei die Anzahl der eingehenden Links für eine Webseite als ein grundsätzliches Kriterium für die Bedeutung der Website mit in die Relevanzbeurteilung einfließt. Dem Konzept der Link-Popularität liegt dabei der Ansatz zugrunde, dass eine Webseite umso wichtiger ist, je häufiger diese von anderen verlinkt wird. Bei dem Verfahren gemäß der US 6,285,999 B1 wird dazu der Inhalt von Webseiten (nodes) in einem Hypermedium wie dem Internet gewichtet. Diese Gewichtung des Inhalts einer Webseite (node) ist dabei abhängig von der Anzahl und der Gewichtung der Webseiten (nodes), die auf erstere Webseite (node) verweisen. Hierbei entsteht eine komplexe Formel, die einen iterativen Prozess zur Berechnung der Gewichtung beschreibt.

Der Artikel "Managing Semantic Content for the Web" von Seth et al. in IEEE Internet Computing July/August 2002 offenbart eine Lösung für das sogenannte Semantic Web. Das aus Webseiten bestehende Semantic Web weist dabei in geregelter bzw. standardisierter Form Inhaltshinweise für die Webseiten auf. Diese geregelten bzw. standardisierten Inhaltshinweise werden beispielsweise durch sogenannte Meta-Tags in HTML-Dokumenten realisiert. Der Artikel schlägt zur Organisation von Konzepten, Domains und Metadaten von Webseiten eine Ontologie vor, die aus zwei Komponenten besteht, dem sogenannten WorldModel und der sogenannten Knowledgebase. Die Knowledgebase übernimmt dabei eine Strukturierung der Inhalte von Webseiten. Die Lösung gemäß dem Artikel versucht damit eine explizite Semantik zu realisieren, welche unabhängig von dem Umgang eines Anwenders mit den Daten der Webseiten ist.

Der Artikel "Semantic Data Modeling of Hypermedia Associations" von Schnase et al. in ACM Transactions on Information Systems January 1993 beschreibt ein sogenanntes Hyperbase Management System (HBMS), eine objektorientierte Datenbank zur Speicherung von Verknüpfungen eines Hypermediums bzw. zur Abbildung eines Hypermediums. Die Datenbank speichert dabei nicht nur die Inhalte sondern auch die Verknüpfungen zwischen den Inhalten. Die Inhalte in der Datenbank werden dabei um die Verknüpfungen zwischen den Inhalten ergänzt bzw. annotiert. Ein Beispiel für Semantic Data Modelling gemäß dem Artikel ist insbesondere die XML-Struktur.

In Anbetracht dieses Standes der Technik liegt der vorliegenden Erfindung die Aufgabe zugrunde, ein Datenverarbeitungssystem und eine Datenverarbeitungsvorrichtung der eingangs genannten Art bereitzustellen, welche unter Meidung der beschriebenen Nachteile hinsichtlich Art und Weise, sowie Umfang der Handhabung derselben verbessert sind, insbesondere unter Berücksichtigung der jeweiligen anwenderindividuellen Nutzungen derselben.

Zur technischen Lösung dieser Aufgabe wird ein Datenverarbeitungssystem mit den Merkmalen des Anspruchs 1 vorgeschlagen.

Zusammenhangsanfragen im Sinne der vorliegenden Erfindung sind Informationen oder Aktionen repräsentierende Daten. Dementsprechend werden seitens des erfindungsgemäßen Datenverarbeitungssystems ganz allgemein Zusammenhänge zwischen zwei aufeinanderfolgenden Inhalten als Informationen repräsentierenden Daten eines oder zweier Datenbestände erfasst.

Der Erfindung liegt die Erkenntnis zugrunde, dass sich durch das erfindungsgemäße dynamische Erfassen von Zusammenhängen zwischen wenigstens zwei Inhalten als Informationen repräsentierenden Daten der Umfang und die Handhabung anwenderindividueller Nutzungen eines Datenverarbeitungssystems verbessern lassen, insbesondere da so Zusammenhänge als Wissen verwaltbar sind. Das Datenverarbeitungssystem gemäß der vorliegenden Erfindung setzt durch die dynamische Zusammenhangserfassung die Erkenntnis um, dass Wissen durch die Verknüpfung von Inhalten entsteht. Im Gegensatz zu einer Verwendung von Begriffsnetzen, die in einer sogenannten Topic-Map gemäß ISO/IEC 13250 kodiert und beispielsweise branchenbezogen von Beratungsunternehmen oder vertikalisierten Wissensmanagementlösungen von Softwareherstellern erstellt werden, ist erfindungsgemäß ein selbstlernendes Datenverarbeitungssystem bereitgestellt, welches sich selbst den Bedürfnissen und Vorlieben des Anwenders anpasst. Dementsprechend können die Funktionalitäten des erfindungsgemäßen Datenverarbeitungssystems einfach und problemlos in bestehende Datenverarbeitungssysteme integriert werden. Aufwendige und schulungsintensive Einführungen des erfindungsgemäßen Datenverarbeitungssystems in bestehende oder neue Projekte können entfallen. Das erfindungsgemäße Datenverarbeitungssystem ermöglicht es einem Anwender, einfach und schnell, von einem Inhalt zu über Zusammenhänge verknüpften anderen Inhalten zu kommen. Da vorteilhafterweise alle Inhalte über Zusammenhänge mehrfach verknüpfbar sind, kann eine Navigation im Rahmen einer Zusammenhangsanfrage vorteilhafterweise auch wieder zum Ausgangspunkt der Anfrage zurückführen, das heißt zu der Zusammenhangsanfrage selbst. Der Anwender kann so vorteilhafterweise Sinnzusammenhänge erkennen, die beispielsweise für seinen augenblicklichen Interessenfokus relevant sind. In einer festgelegten, statischen hierarchischen Ordnung von Datenverarbeitungssystemen, wie sie beispielsweise bei in der Regel Baumstrukturen für die Auswahl von Inhalten nutzenden Betriebssystemen und deren Anwendungsprogrammen gegeben ist, ist dies nicht möglich, da diese eine Berücksichtigung neuer Ordnungsstrukturen nicht zu lassen.

Während Anwender von Datenverarbeitungssystemen ansonsten über vom Datenverarbeitungssystem bereitgestellte Eingabemasken Daten eingeben, ermöglicht es das erfindungsgemäße Datenverarbeitungssystem vorteilhafterweise Daten entsprechend eines aktuellen Bedarfs des Anwenders zu beschreiben. So legt das erfindungsgemäße Datenverarbeitungssystem beispielsweise die Beschreibung einer Adresse oder eines Projektes nicht starr fest, sondern ermöglicht dem Anwender durch die erfindungsgemäße dynamische Datenhaltung und die Gestaltung einer entsprechenden grafischen Benutzeroberfläche eine äußerst flexible und individuelle Nutzungshandhabung.

Gemäß Anspruch 1 der Erfindung wird der Zusammenhang als Verknüpfung zwischen wenigstens einem wenigstens eine Information repräsentierenden Datum wenigstens eines Datenbestandes und wenigstens einem weiteren wenigstens eine Information repräsentierenden Datum wenigstens eines Datenbestandes und/oder wenigstens einer elektronischen Nutzung eines wenigstens eine Information repräsentierenden Datums wenigstens eines Datenbestandes erfasst.

Gemäß Anspruch 1 werden die Verknüpfungen wie und vorzugsweise mit den dynamisch erfassten Zusammenhängen erfasst. Im Gegensatz relationalen Datenbanken, bei denen Verknüpfungen von mit Daten versehenen Tabellen verwaltet werden, verwaltet das erfindungsgemäße Datenverarbeitungssystem Verknüpfungen der erfassten Zusammenhänge dynamisch, vorzugsweise in n-zun-Relationen, wobei die Zusammenhänge seitens des erfindungsgemäßen Datenverarbeitungssystems selbstständig ermittelt und gepflegt, das heißt insbesondere auf dem aktuellsten Stand gehalten werden.

Das erfindungsgemäße Datenverarbeitungssystem indiziert vorteilhafterweise alle im System vorhandenen und/oder angeschlossenen bzw. einbindbaren Datenbestände und schafft so aus Anwendersicht eine Auflösung der ansonsten beispielsweise bei Suchmaschinen gegebenen Trennung von Datenbank und Dateisystem. Das erfindungsgemäße Datenverarbeitungssystem ermöglicht somit unabhängig der technischen Realisierung der Persistenz von Daten, ein Durchsuchen von Inhalten. Dabei wird durch das erfindungsgemäße Datenverarbeitungssystem quasi eine Verbindung von Indexen und Datenbanken geschaffen, die verschiedene Suchoptionen nach Zusammenhängen ermöglicht, insbesondere eine Integration präziser Suchanfragen und Volltextsuchen. Suchanfragen werden analysiert und für eine interne Abfrage der Datenquellen umgewandelt.

Das erfindungsgemäße Datenverarbeitungssystem weist vorteilhafterweise eine Strukturierung auf, die es ermöglicht, Datenquellen einzubinden, ohne Daten replizieren oder Ressourcen für Redundanzen einzusetzen zu müssen (Plugin-Struktur des Datenverarbeitungssystems). Die ansonsten einen hohen Entwicklungsaufwand und große Systemressourcen erfordernde Anbindung von Datenquellen zur Datenmigration kann somit vorteilhafterweise entfallen.

Gemäß einem weiteren Vorschlag der Erfindung berücksichtigt das erfindungsgemäße Datenverarbeitungssystem auch lokale Datenbestände die beispielsweise verschiedene Anwender in einem Computer-Netzwerk, beispielsweise verschiedene Mitarbeiter in einem Firmennetzwerk, beispielsweise einem Client-Server-Netzwerk, miteinander zur Nutzung teilen können. Inhalte und deren Zusammenhänge sind so in einem Firmennetzwerk beispielsweise für Marktforschungs- und/oder der Wettbewerbsanalysen nutzbar.

Gemäß einem vorteilhaften Vorschlag der Erfindung wird die Verknüpfung durch manuelle Eingabe erzeugt, vorzugsweise durch eine Auswahleingabe.

Gemäß Anspruch 1 der Erfindung wird die Verknüpfung durch einen syntaktischen Vergleich der Informationen repräsentierenden Daten der Zusammenhangsanfrage und des wenigstens einen Datenbestandes erzeugt. Die Besonderheit der erfindugsgemäßen Technik ist dabei ein syntaktischer Vergleich auf der Basis von in einfügbaren Modulen, sogenannten Plug-ins jeweils beschreibbaren Regeln (Keys). Das hat zwei entscheidende Vorteile: Zum einen lassen sich valide, vom Anwender spezifizierte Zusammenhänge (beispielsweise Geschäftsregeln) definieren und auf den Datenbestand anwenden. Das erlaubt zugleich eine flexible Datenstruktur. Zum anderen können durch die Regeln Zusammenhänge zwischen Informationen und Handlungsoptionen (dynamische Funktionen) hergestellt werden. Hierbei kommt erfindungsgemäß ein System zum Einsatz, bei dem die Information von Aktionen seitens eines Anwenders oder automatischen Prozesses allen Datenquellen verwaltenden Systemkomponenten (Plug-ins) mitgteilt wird, um gegebenenfalls selbst Aktionen auszulösen oder Veränderungen am Datenbestand vorzunehmen. Vorteilhafterweise kommt die syntaktische Analyse in Kombination mit weiteren Analysen zur Anwendung, um schnelle Ergebnisse und ein unmittelbar einsatzfähiges Gesamtsystem zu realisieren.

Eine weitere vorteilhafte Ausgestaltung der Erfindung sieht vor, dass die Verknüpfung durch einen semantischen Vergleich der Informationen repräsentierenden Daten der Zusammenhangsanfrage und des wenigstens einen Datenbestandes erzeugt wird. Im Rahmen des semantischen Vergleiches wird dabei vorteilhafterweise ein semantisches Netz, aus dem Zusammenhänge erfassbar sind, erzeugt.

In einer besonders vorteilhaften Ausgestaltung der Erfindung werden die verschiedenen Möglichkeiten der Verknüpfungserzeugung kombinativ angewendet. Im Unterschied zu neuronalen Netzen arbeitet das erfindungsgemäße Datenverarbeitungssystem mit einer Kombination von syntaktischen und semantischen Analyseprozessen, um eine hohe Lerngeschwindigkeit zu erzielen.

In einer weiteren besonders vorteilhaften Ausgestaltung der Erfindung sind weitere Vergleiche zur Verknüpfungserfassung in das erfindungsgemäße Datenverarbeitungssystem integrierbar. So kann der Anwender beispielsweise seinen individuellen Bedürfnissen entsprechend zusätzlich zu den genannten Möglichkeiten einer Verknüpfungserfassung weitere Analyseverfahren und/oder - methoden integrieren und das Datenverarbeitungssystem entsprechend um diese erweitern.

Ein weiterer vorteilhafter Vorschlag der Erfindung ist gekennzeichnet durch wenigstens eine elektronische Nutzung eines wenigstens eine Information repräsentierenden Datums wenigstens eines Datenbestandes als ein wenigstens eine Information repräsentierendes Datum einer Zusammenhangsanfrage. Eine besonders vorteilhafte Ausgestaltung der Erfindung ist gekennzeichnet durch eine Erfassung von elektronischen Nutzungen von wenigstens eine Information repräsentierenden Daten wenigstens eines Datenbestandes nach Zeit und/oder Häufigkeit und Nutzung dieser Erfassung als ein wenigstens eine Information repräsentierendes Datum einer Zusammenhangsanfrage. Eine weitere vorteilhafte Ausgestaltung der Erfindung ist gekennzeichnet durch wenigstens eine Erfassung eines Zusammenhangs als elektronische Nutzung eines wenigstens eine Information repräsentierenden Datums eines Datenbestandes. Eine weitere Ausgestaltung der Erfindung ist gekennzeichnet durch Nutzung wenigstens eines Verweises auf wenigstens einen Informationen repräsentierende Daten umfassenden Datenbestand. Mit diesen Maßnahmen ist vorteilhafterweise einzeln oder in Kombination beispielsweise die Nutzung einer Datei mit einem Anwendungsprogramm als Zusammenhang erfassbar. Umfang und Handhabung des erfindungsgemäßen Datenverarbeitungssystems lassen sich so weiter verbessern und Anwendernutzungen weiter individualisieren. Für die Analyse protokolliert das erfindungsgemäße System vorteilhafterweise Aktionen, Zeitpunkt und Folge des Anwenders sowie vorteilhafterweise Ergebnisse von Datenveränderungen die überprüft werden, vorzugsweise mit einem sogenannten Crawler, einem Teilsystem, dass Veränderungen der Daten überprüft.

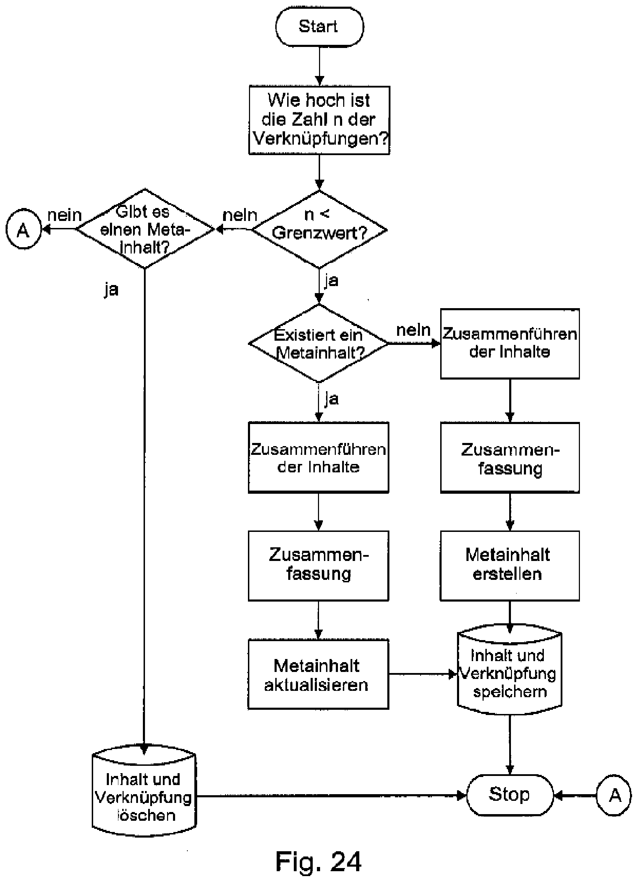

Vorteilhafterweise erfolgt die Zusammenhangserfassung gemäß Anspruch 1 gewichtet. Dadurch ist die Dynamik der Erfassung von Zusammenhängen vorteilhafterweise weiter erhöhbar oder abschwächbar. Erfindungsgemäß wird die Zusammenhangsgewichtung wenigstens eines bereits als ein wenigstens eine Information repräsentierendes Datum in einem Datenbestand erfassten Zusammenhangs in Abhängigkeit der Zusammenhangsgewichtung eines nachfolgend erfassten Zusammenhangs verändert, vorzugsweise wird die Zusammenhangsgewichtung erhöht oder erniedrigt. In einer besonders bevorzugten Ausgestaltung der Erfindung erfolgt die Gewichtung nicht nur nach einer prozentualen Treffergenauigkeit einer Suchanfrage, sondern anhand des von dem Datenverarbeitungssystem durch dynamische Erfassung gebildeten semantischen Netzes, welches durch zahlreiche Parameter selbstständig und fortlaufend optimiert wird, insbesondere durch kontinuierliche Aktualisierung der erfassten Zusammenhänge. Details dieses iterativen, mehrere Bifurkationen umfassenden Prozesses ergeben sich im Zusammenhang mit der unten noch folgenden Beschreibung der in den Figuren der Ausführungsbeispiele dargestellten Flussdiagramme, insbesondere aus Figur 24.

Vorteilhafterweise wird wenigstens ein erfasster Zusammenhang wiedergegeben, vorzugsweise seitens einer optischen Anzeigeeinrichtung des erfindungsgemäßen Datenverarbeitungssystems bzw. einer erfindungsgemäßen Datenverarbeitungsvorrichtung. Gemäß einem weiteren vorteilhaften Vorschlag der Erfindung wird mit dem erfassten Zusammenhang dessen Gewichtung wiedergegeben.

In einer weiteren Ausgestaltung der Erfindung werden Gewichtungen mit einer Verfallszeit versehen, um Zusammenhänge in Abhängigkeit der Zeit abzuwerten. Da jeder Anwender das erfindungsgemäße Datenverarbeitungssystem unterschiedlich intensiv nutzen wird, ist es zweckmäßig für die Verfallszeit einen Zähler, der als kleinste Zeiteinheit eine Aktion verwendet, zu verwenden. Eine Aktion ist in diesem Fall, der Aufruf eines Inhaltes vorzugsweise einschließlich der Bearbeitung desselben und/oder dem Anlegen eines neuen Inhaltes vom Datenverarbeitungssystem aus. In einer weiteren Ausgestaltung der Erfindung findet die Zeitdauer, innerhalb der ein Anwender einen genutzt hat, beispielsweise angeschaut hat bei der Bestimmung der Verfallszeit Verwendung. Vorteilhafterweise verlängert sich die Verfallszeit einer Gewichtung eines Zusammenhangs, je länger und/oder häufiger der Anwender sich mit einem Inhalt beschäftigt hat, da dessen Bedeutung für den Anwender umso höher ist bzw. sein muss.

Eine weitere vorteilhafte Ausgestaltung der Erfindung ist gekennzeichnet durch eine graphische Benutzerschnittstelle zur Eingabe und/oder Wiedergabe von Zusammenhangsanfragen, Verknüpfungen, Zusammenhängen und/oder Zusammenhangsgewichtungen. Vorteilhafterweise ist die graphische Benutzerschnittstelle weiter zur Eingabe, Änderung und/oder Wiedergabe von Informationen repräsentierenden Daten in wenigstens einem Datenbestand ausgebildet. Die Benutzerschnittstelle stellt vorteilhafterweise eine graphische Benutzeroberfläche bereit, die eine handlungsorientierte Navigation ermöglicht. Das heißt, dass an Stelle von ansonsten bei hierarchisch strukturierten Menüstrukturen dem Anwender zur Auswahl angebotenen möglichen Funktionen erfindungsgemäß Handlungsoptionen zur Auswahl angeboten werden, die im Kontext der Situation bzw. aufgerufenen Inhalte sinnvoll ist bzw. Sinn macht. Gemäß einem besonders bevorzugten Vorschlag der Erfindung nutzt die handlungsorientierte Navigation eine binäre Grundstruktur, die auf der einen Seite eine Eingabe von Inhalten und auf der anderen Seite eine Ausgabe von Inhalten ermöglicht. Vorteilhafterweise wird diese handlungsorientierte, binäre Navigation mit geräteübergreifender Gültigkeit, das heißt unabhängig von der jeweiligen Datenverarbeitungsvorrichtung realisiert.

In einer besonders bevorzugten Ausgestaltung der Erfindung teilt die graphische Benutzerschnittstelle den zur Wiedergabe seitens einer Anzeigeeinrichtung zur Verfügung stehenden Anzeigebereich in drei Bereiche, wobei in einem ersten Bereich das Ergebnis einer Selektion von Informationen repräsentierende Daten, in einem zweiten Bereich mit einer Anzeige eine aus der Selection im ersten Bereich ausgewählte Information und in einem dritten Bereich, der bzw. die Zusammenhänge wiedergegeben werden. Die Wiedergabe der aus der Selection im ersten Bereich ausgewählten Information im zweiten Bereich erfolgt vorzugsweise als Vorschau oder als Vollansicht der Information. Der Anzeigebereich kann dabei auch in Form eines Fensters seitens der Anzeigeeinrichtung bereitgestellt werden. Ein weiterer Vorschlag der Erfindung ist gekennzeichnet durch eine horizontale oder vertikale Aufteilung. Vorteilhafterweise ist die Größe der Bereiche ein- oder verstellbar.

In einer weiteren vorteilhaften Ausgestaltung der Erfindung erfolgt die Wiedergabe zumindest teilweise in auswählbarer Form, das heißt die wiedergegebenen Zusammenhänge sind beispielsweise selbst als Menüpunkt für Handlungsoptionen und/oder als Verknüpfung nach Art eines Links ausgebildet, und durch Auswahl, beispielsweise durch sogenanntes "Anklicken", entsprechend nutzbar.

Vorteilhafterweise werden Inhalte bzw. Inhalte aufweisende Dokumente im Rahmen einer Vorschau seitens des Datenverarbeitungssystems wiedergegeben. Dadurch werden die Orientierungsmöglichkeiten für Anwender in den Zusammenhängen und den Inhalten weiter verbessert. Vorteilhafterweise ist die Vorschau während des Navigierens bzw. der Steuerung durch Datenbestände wiedergebbar, so dass der Anwender einen schnellen Überblick über Zusammenhänge erlangen kann. Vorteilhafterweise enthält diese Vorschau eine Zusammenfassung des Inhaltes, beispielsweise eine hinsichtlich der dargestellten Elemente bzw. Bestandteile reduzierte Internetseite oder einen zusammengefassten Text. Dadurch sind ansonsten gegebene Beschränkungen, die beispielsweise bei eine Vorschau auf Dokumente in Form von kleinen Bildern (sogenannte Thumbnails), in Form von Anfängen von Texten oder in Form von Programm- bzw. Dokumentensymbolen (sogenannten Icons) gebenden Betriebssystemen gegeben sind, erfindungsgemäß beseitigbar.

In einer besonders bevorzugten Ausgestaltung der Erfindung wird das erfindungsgemäße Datenverarbeitungssystem, vorzugsweise im Rahmen einer auf einem Rechner laufenden Software, zur dynamischen Organisation von Informationen und/oder Prozessen eingesetzt.

Vorteilhafterweise ist das erfindungsgemäße Datenverarbeitungssystem Bestandteil einer Datenbankanwendung oder zumindest zusammen mit einer Datenbankanwendung nutzbar.

Vorrichtungsseitig wird zur technischen Lösung der Aufgabe ferner eine Datenverarbeitungsvorrichtung zur elektronischen Verarbeitung von Daten mit den Merkmalen des Anspruchs 19 bereitgestellt.

In einer weiteren vorteilhaften Ausgestaltung der Erfindung wird eine Datenverarbeitungsvorrichtung zur elektronischen Verarbeitung von Daten, mit einer Kontroll- und/oder Recheneinheit, einer Eingabeeinheit und einer Ausgabeeinheit, bereitgestellt, die gekennzeichnet ist durch eine Nutzung eines erfindungsgemäßen Datenverarbeitungssystems.

In einer vorteilhaften Ausgestaltung der Erfindung ist die Datenverarbeitungsvorrichtung als mobiles Endgerät ausgebildet, vorzugsweise als ein in Mobilfunknetzen nutz- bzw. betreibbares mobiles Endgerät. Besonders bevorzugt ist eine Ausgestaltung der Datenverarbeitungsvorrichtung als Mobilfunktelefon.

In einer besonders vorteilhaften Ausgestaltung der Erfindung weist die Eingabeeinheit ein auf einer zwischen wenigstens zwei, vorzugsweise vier, Endpositionen verschwenkbaren Wippmechanik verdrehbar gelagertes Bedienelement auf, wobei die jeweilige Endposition durch Verschwenken des verdrehbar gelagerten Bedienelementes in die jeweilige Richtung einnehmbar ist und wobei Verdreh- und/oder Verschwenkbewegungen des Bedienelementes als Auswahl- und/oder Bedieneingaben nutzbar sind. Vorteilhafterweise ist das, vorzugsweise scheibenartig ausgebildete Bedienelement entgegen der Kraft einer Feder verschwenkbar.

In einer bevorzugten Ausgestaltung der Erfindung arbeitet die erfindungsgemäße mobil nutzbare Datenverarbeitungsvorrichtung mit einer einzigen Taste, die fünf mit Tastern versehene oder von den Tastern bereitgestellte Druckpunkte besitzt und sich drehen lässt. Die Drehbewegung ermöglicht die Auswahl von Optionen in einer Liste oder Tabelle. Bei der Auswahl von Optionen aus einer Tabelle wird voteilhafterweise nacheinander jedes Feld der Tabelle von links nach rechts und Zeile für Zeile hervorgehoben, wenn der Anwender das Rad beispielsweise im Uhrzeigersinn dreht. Eine Bewegung gegen den Uhrzeigersinn, führt entsprechend zu einer entgegengesetzten Richtung. Damit lassen sich schnell Buchstaben aus einem Alphabet oder Nummern auswählen. Das ist ergonomischer und schneller als die bisher bekannten Taststuren mit mehrfach belegten einzelnen Tasten. Die Druckpunkte der genannten Taste befinden sich vorzugsweise in der Mitte und an den vier Seiten der Taste. Der rechte Druckpunkt der Taste bedeutet beispielsweise eine Auswahl aus einer Inhaltsliste, zu dem Zusammenhänge aufrufbar sind. Der linke Druckpunkt der Taste dient beispielsweise zum Zurücknavigieren. Der obere Druckpunkt der Taste führt beispielsweise zur Auswahl bzw. einem Startmenü oder dergleichen. Der untere Druckpunkt der Taste führt beispielsweise zu Handlungsoptionen, die im jeweiligen Kontext sinnvoll sind. Der Mittlere Druckpunkt führt beispielsweise direkt zur Auswahl eines Inhaltes, zur Ansicht des Inhaltes oder zur Wiedergabe des Inhaltes, beispielsweise dem Abspielen einer Multimedia-Datei.

In einer weiteren Ausgestaltung der Erfindung weist die Ausgabeeinheit ein Display, vorzugsweise eine Flüssigkristallanzeige (LCD), auf, welche vorzugsweise in einem Bereich oberhalb des Bedienelementes angeordnet ist.

In einer weiteren Ausgestaltung der Erfindung wird für die Steuerung eine berührungsempfindliche Fläche, vorzugsweise ein sogenannten Touchscreen, verwendet. Die beispielsweise unterhalb des Displays angeordnete oder selbst das Display bildende Fläche ist vorteilhafterweise in fünf Bereiche unterteilt, die hinsichtlich der Bedienung die Funktionalitäten entsprechend der Ausgestaltung des Bedienelementes als verdreh- und verschwenkbares Rad realisieren.

Bei Integration von Telefoniefunktionen seitens einer erfindungsgemäßen Datenverarbeitungsvorrichtung sind vorteilhafterweise zwei Tasten, eine für die Annahme und eine für die Ablehnung bzw. Beendigung eines Gespräches auf der Vorderseite unter dem Display positioniert. Vorteilhafterweise sind diese beiden Tasten auch derart funktionalisiert, jeweils eine Optionsliste der erfindungsgemäßen binären Navigation aufzurufen. Um die Telefonie zu vereinfachen, können die Tasten virtuell auf der sensorischen Fläche integriert sein. Die Fläche ist dann in mindestens zwölf Feldern ensprechend einer klassichen von Tastentelefonen her bekannten Tastatur unterteilt. Die Ziffern (und ggf. die Buchstaben) sind in diesem Falle vorteilhafterweise beleuchtet und fallen dann entsprechend auf, wenn die alphanumerischen Zeichen im Sinne eines klassischen Telefons genutzt bzw. gebraucht werden. Die tasten werden vorteilhafterweise ebenfalls durch kurzes einfaches oder mehrfaches antippen aktiviert.

Vorteilhafterweise ist das erfindungsgemäße Datenverarbeitungssystem derart ausgebildet, dass dieses mit einer Java VM lauffähig ist, so dass das Datenverarbeitungssystem prinzipiell auf allen mobilen Endgeräten nutzbar ist. In einer besonders bevorzugten Ausgestaltung der Erfindung unterstützt die Datenverarbeitungsvorrichtung dabei die besondere Ergonomie des Datenverarbeitungsystems.

Das erfindungsgemäße Datenverarbeitungssystem beinhaltet und realisiert in einer bevorzugten Ausgestaltung der Erfindung vorteilhafterweise die nachfolgenden Verfahren und Vorrichtungen zur Erfassung von Zusammenhängen zwischen Informationen repräsentierenden Daten:
Basierend auf Erkenntnissen der Linguistik, der Epistemologie und der Neurologie, werden Zusammenhänge zwischen Inhalten (Informationen repräsentierenden Daten) erfasst, wobei die Zusammenhänge entsprechend neuronalen Mustern bzw. Assoziationen im menschlichen Gehirn, dynamisch als modifizierbare, verstärkbare oder abschwächbare, n-zu-n-Verknüpfungen (n: natürliche, ganze Zahl) erfasst werden.

So wie das menschliche Gehirn Reize seiner Sinnesorgane als mentale Präsentate zu mentalen Repräsentaten verdichtet bzw. verarbeitet, beispielsweise leitet das menschliche Gehirn mittels des visuellen Wahrnehmungssystems aus synchron aktivierten Reizen ein bewegtes Objekt ab, werden bei dem erfindungsgemäßen Datenverarbeitungssystem Zusammenhänge zwischen Inhalten (Informationen repräsentierenden Daten) erfasst. In Iterationsprozessen lassen sich auf Basis der dementsprechend erfassten dynamischen Zusammenhänge Informationen bzw. Inhalte zu Wissen verdichten. Ferner sind die so erfassten Zusammenhänge erfindungsgemäß selbst in Form von Informationen repräsentierenden Daten als neuer Inhalt nutzbar, beispielsweise als Handlungsoptionen, die dem Anwender zur Auswahl angeboten werden oder im Rahmen automatisierter Abläufe in Prozesssteuerungen des Datenverarbeitungssystems einfließen. Vorteilhafterweise ist das erfindungsgemäße Datenverarbeitungssystem dabei pragmatisch und selbstorganisierend, so dass keine Konfigurationen durch den Anwender erforderlich sind. Dabei erlaubt das erfindungsgemäße Datenverarbeitungssystem dennoch offene Steuerungen durch den Anwender.

Vorteilhafterweise werden im Rahmen der Erfassung von Zusammenhängen verschiedene Methoden zum Herstellen, Modifizieren und Auflösen von dynamischen n-zu-n-Verknüpfungen kombinativ miteinander angewendet, insbesondere Verknüpfungen durch manuelle Eingaben, Verknüpfungen durch syntaktische Vergleiche und/oder Verküpfungen durch semantische Vergleiche. Ferner können mathematisch-statistische Analyserverfahren zur Erfassung von Zusammenhängen Verwendung finden. Vorteilhafterweise werden die durch Verknüpfungen erfassten Zusammenhänge mit einer Gewichtung versehen. Die Geichtung erfolgt dabei vorteilhafterweise mit Werten, vorzugsweise mit Werten zwischen 0 und 1, entsprechend keinem Zusammenhang (Wert 0) oder einem unmittelbaren Zusammenhang (Wert 1).

Zusammenhangsverknüpfungen durch manuelle Eingaben seitens des Anwenders kann mit dem größtmöglichen Gewichtungswert, vorliegend 1, versehen, dass heißt die Gewichtung der Verknüpfung bekommt den höchsten und fixen Wert Dabei findet insbesondere die nachfolgend noch näher beschriebene Ergonomie handlungsorientierter Logik Verwendung. Als Alternative kann ein kleinerer Wert gesetzt werden, um die Verknüpfung in das semantische Netz einfließen zu lassen.

Bei Zusammenhangsverknüpfungen durch syntaktische Vergleiche oder Regeln werden die Inhalte (Informationen repräsentierenden Daten) von Dateien und/oder Datenbanken oder definierte Teile von Inhalten als Datenbestand nach übereinstimmenden Worten, Wortbestandteilen bzw. Zeichenketten durchsucht, die den Inhalten (Informationen repräsentierenden Daten) der Zusammenhangsanfrage entsprechen. Durch diese schnelle und valide Verknüpfung, die eine Art Grundgerüst für Zusammenhänge bereitstellt, wird die selbstständige Erfassung von Zusammenhängen, das sogenannte "Selbstlernen" des erfindungsgemäßen Datenverarbeitungssystems, beschleunigt.

Bei Zusammenhangsverknüpfungen durch semantische Vergleiche werden dynamische Zusammenhänge vorteilhafterweise anhand oder mittels der Folge von Inhalten (Informationen repräsentierende Daten) von Datenbeständen (Dateien und/oder Datenbanken) und/oder von Nutzungen von Inhalten (Informationen repräsentierende Daten) von Datenbeständen (Dateien und/oder Datenbanken) erfasst. Dabei nutzt das erfindungsgemäße Datenverarbeitungssystem Erkenntnisse der impliziten Semantik. Als implizit wird die Semantik bezeichnet, weil diese vorliegend nicht explizit durch ein Begriffsnetz (Topic Map) oder semantischen Regeln der Linguistik modelliert wird, sondern nach der Erkenntnis, dass Zusammenhänge zwischen Inhalten wie Bedeutungen in einer Sprache nicht per definitionem entstehen, sondern dynamisch durch den Gebrauch derselben. So entstehen Bedeutungen einer Sprache dadurch, dass die Sprache verwendet wird und erfindungsgemäße Zusammenhänge zwischen Inhalten dadurch, dass diese Inhalte genutzt werden. Semantik ist insofern nicht von der Sprachpraxis bzw. vorliegend von den Inhalten abstrahierbar.

In der technischen Realisierung von Zusammenhangsverknüpfungen durch semantisches Vergleichen erhält jede dynamische Verknüpfung systemintern einen Wert zwischen 0 und 1, wobei der Wert 0 anzeigt, dass kein Zusammenhang besteht und der Wert 1 einen unmittelbaren Zusammenhang anzeigt, welcher beispielsweise manuell oder durch syntaktisches Vergleichen hergestellt wurde. Das Datenverarbeitungssystem protokolliert alle Aktionen des Anwenders mit dem Datenverarbeitungssystem bzw. die Folge aller aufgerufenen oder genutzten Inhalte, beispielsweise editierte Inhalte. Als Inhalte werden - wie bereits erläutert - Informationen repräsentierende Daten eines beliebigen Datenbestandes, beispielsweise einer Datei und/oder einer Datenbank, verstanden, die in bzw. aus unterschiedlichen Datenformaten und aus unterschiedlichen Datenquellen stammen können.

Folgen zwei Inhalte aufeinander, entsteht eine latente Verknüpfung. Taucht diese Folge mehrfach auf wird die Verknüpfung verstärkt. Jede Verknüpfung ist vorteilhafterweise ferner zugleich mit einer Verfallszeit einer vorgebbaren Zeiteinheit versehen, wobei in einer Zeiteinheit der Wert einer Verknüpfung abgeschwächt wird und letztendlich nach mehreren Zeiteinheiten gegen den Wert 0 tendiert.

Über die unmittelbare Folge von zwei Inhalten hinaus sind seitens des erfindungsgemäßen Datenverarbeitungssystems vorteilhafterweise Gruppierungen von Inhaltsaufrufen, die ein Muster bilden, gegeben. Unter Muster wird dabei eine Folge von Inhaltsaufrufen verstanden, die unabhängig von ihrer Reihenfolge wiederkehren. Die Muster können von unterschiedlicher Größe bzw. Zahl der Inhalte pro Folge sein und vorteilhafterweise ein sogenanntes Cluster bilden, welches über den Zusammenhang hinaus auf einer semantischen Metaebene ein Thema bildet. Ein solches Thema wäre wiederum beispielsweise als Zusammenhangsanfrage mit Hilfe eines syntaktischen Vergleichs zur Erfassung benennbar.

Ferner ist das erfindungsgemäße Datenverarbeitungssystem in der Lage, die Relevanz von erfassten Zusammenhängen für den jeweilgen Anwender durch den semantischen Vergleich zu bestimmen. Dadurch vermeidet das erfindungsgemäße Datenverarbeitungssystem eine übermäßige Informationsflut und ist in der Lage, Zusammenhangsanfragen des Anwenders präziser und fokussierter zu beantworten. Vorteilhafterweise kann die Relevanz von dem erfindungsgemäßen Datenverarbeitungssystem ferner zu einer selbstorganisierenden Pflege des Datenverarbeitungssystem genutzt werden, beispielsweise um nicht genutzte, alte und/oder unwichtige bzw. unwichtig gewordene Daten, die ansonsten das Datenverarbeitungssystem belasten würden, zu entfernen.

Bei Zusammenhangsverknüpfungen durch semantisches Vergleichen lassen sich durch entsprechende Ausgestaltung vorteilhafterweise Inhalte und/oder Nutzungen von Inhalten nach individuellen Interessen eines Anwenders analysieren, nachfolgend Interessen- bzw. Aktionsanalyse genannt.

Bei einer Interessenanalyse wird untersucht welche Inhaltskategorien der Anwender vorzugsweise im Zusammenhang benötigt. Auf diese Weise trainiert das erfindungsgemäße Datenverarbeitungssystem die anwenderspezifischen Regeln für die syntaktische Analyse der Inhalte. Benötigt der Anwender beispielsweise Rechnungen und Aufträge wenn er einen Adressatz aufruft, werden diese Beziehungen seitens des erfindungsgemäßen Datenverarbeitungssystems auch vorzugsweise angezeigt. Unter Inhaltskategorien versteht das erfindungsgemäße Datenverarbeitungssystem Inhalte, die formale Ähnlichkeit haben, beispielsweise elektronische Post, Adressen, Rechnungen, Aufträge, Projektplanungen, Termine, und dergleichen. Wie bei semantischen Vergleichen werden die Ergebnisse der Interesenanalyse durch ein dynamisches Netz repräsentiert, dessen Beziehungen verstärkbar oder abschwächbar sind.

Durch diese Interessenanalyse lässt sich ein engerer Fokus auf die den Anwender interessierenden Inhalte, Nutzungen von Inhalten und/oder Aspekte eines Themas von Inhalten eingrenzen. Unter Thema ist dabei eine Gruppe von Inhalten zu verstehen, die - wie bereits erläutert - im Rahmen eines semantischen Vergleichs identifiziert und zusammengefasst wurden oder die sich aus einem abgefragten und erfassten Zusammenhang ergibt. Die Zusammenhangsanfrage kann dabei vorteilhafterweise auf unterschiedliche Art und Weise initiiert werden, beispielsweise durch dynamisch erfasste Nutzungen des Datenverarbeitungssystems durch den Anwender oder durch eine manuell oder - bei Integration einer Spracherkennung und natürlichsprachliche Interpretation seitens des erfindungsgemäßen Datenverarbeitungssystems - mündlich dem Datenverarbeitungssystem gestellte Zusammenhangsanfrage, beispielsweise in einem dafür vorgesehenen Suchfeld seitens einer graphischen Benutzerschnittstelle zur Steuerung des erfindungsgemäßen Datenverarbeitungssystems.

Bei einer Aktionsanalyse wird untersucht welche Nutzungen von Inhalten der Anwender vorzugsweise im Zusammenhang benötigt. Es werden somit nicht die Inhalte, sondern die mit den Inhalten verbundenen Handlungen, die vorteilhafterweise zu Handlungsoptionen in Abhängigkeit von Variablen wie Inhalt, Inhaltstyp oder Thema seitens des erfindungsgemäßen Datenverarbeitungssystems aufbereitet werden, vernetzt erfasst. Für jeden aufgerufenen Inhalt oder eine Zusammenhangsanfrage ist das erfindungsgemäße Datenverarbeitungssystem in der Lage, dynamisch Handlungsoptionen anzubieten, die in dem jeweiligen Fall für den Anwender Sinn machen bzw. aufgrund seiner üblichen Aktionsweise besonders wahrscheinlich sind. So macht es beispielsweise Sinn, dass in einem entsprechenden Datenverarbeitungssystem eine erstellte Rechnung verbucht wird oder auf eine e-Mail eine Antwort erfolgen kann.

Bei einer vorteilhaften Analyse nach Mustern in den Inhalten und/oder deren Nutzungen wird vorliegend vorteilhafterweise ein sogannnter Pattern Analyzer verwendet, ein Prozess, welcher in unstrukturierten Inhalten nach Mustern, die er als eigenständigen Inhalt erkennt oder für eine Zusammenfassung von Inhalten nutzt, sucht.

So erkennt der sogenannte Pattern Analyzer beispielsweise eine Adresse oder ein Bild im Text und kann diese Informationen nutzen, um Sie als eigenständigen Inhalt verfügbar zu machen. Internetseiten können auf diese weise zu einer automatisierten Addressrecherche genutzt werden. Damit greift der Pattern Analyzer vorteilhafterweise die Konzepte der beschriebenen erfindungsgemäßen semantischen Analyse auf. Vorteilhafterweise werden ausgewählte Inhalte, beispielsweise E-Mails, automatisiert ausgewertet und als strukturierte Information bereitgestellt.

Wie oben bereits erläutert überprüft der Analyzer im Anschluss an die semantische Analyse, ob es nun Verknüpfungen zwischen den Links gibt und ob ein Meta-Link etabliert werden kann.

Für die Erstellung von Metainhalten bzw. für die Identifikation von Themen überprüft der Semantic Analyzer zunächst wieviele Links zu einem Inhalt bestehen. Ist eine kritische Zahl, die dynamisch definierbar ist, erreicht und existiert noch kein Metainhalt, der die Menge der Links des vom Analyzer untersuchten Inhaltes als Teilmenge seiner Links entält, wird ein neuer Metainhalt erstellt. Dafür werden die einzelnen Inhalte zusammengeführt und zusammengeführt. Das kann vorteilhafterweise mit dem PatternAnalyser oder anderen Analyseverfahren bzw. -methoden erfolgen.

Existiert ein Thema und wird die kritische Zahl der Verknüpfungen unterschritten, wird der Metainhalt gelöscht. Metainhalte können vorteilhafterweise über ein entsprechendes Plug-in verwaltet werden.

Das erfindungsgemäße Datenverarbeitungssystem ist prinzipiell in der Lage, unbegrenzte Datenbestände in Form von Dateien und/oder Datenbanken unterschiedlicher Formate und aus verschiedenen Datenquellen in das Datenverarbeitungssystem einzubinden. Dabei sollen die Datenquellen weder importiert noch verändert werden, um vorteilhafterweise in ihrem ursprünglichen Systemkontext funktionsfähig und nutzbar zu bleiben. Das dient der Investitionssicherheit und beschleunigt bzw. unterstützt ferner eine Implementierung des erfindungsgemäßen Datenverarbeitungssystems. Dazu weist das erfindungsgemäße Datenverarbeitungssystem vorteilhafterweise eine zentrale Datenverwaltung - nachfolgend "Repository" genannt - auf, welche Verweise auf die verschiedenen Datenbestände und Datenquellen enthält. Dabei werden nicht die kompletten Inhalte gespeichert, sondern nur Verweise zu den jeweiligen Daten. Dadurch kann eine doppelte Datenhaltung vermieden werden.

Wie bereits erläutert, ist das erfindungsgemäße Datenverarbeitungssystem in der Lage, Informationen repräsentierende Daten als Inhalte aus verschiedenen Datenbeständen sowohl Datenbanken als auch Dateien, in unterschiedlichen Formaten aus unterschiedlichsten Datenquellen, beispielsweise über das Internet oder ein lokales Firmennetzwerk, zu integrieren, deren Struktur zu identifizieren und die ermittelten Zusammenhänge der Inhalte bzw. Inhaltsbestandteile, beispielsweise den Absender einer E-Mail zu identifizieren. Dabei werden die einzelnen Inhaltsbestandteile vorteilhafterweise in Beziehung zu korrespondierenden Inhaltsbestandteilen anderer Inhalte gesetzt. Durch diese Maßnahme wird das erfindungsgemäße Datenverarbeitungssystem beim Durchsuchen von Inhalten von Datenbeständen nach Worten, Wortbestandteilen und/oder Zeichenketten beschleunigt.

Dieser Prozess des Durchsuchens von Inhalten von Datenbeständen nach Worten, Wortbestandteilen und/oder Zeichenketten - nachfolgend auch "Crawler" genannt - wird vorteilhafterweise im Hintergrund der Anwendung des erfindungsgemäßen Datenverarbeitungssystems ausgeführt und sucht in periodischen Abständen nach neuen und veränderten Inhalten, die für die Analyse vorzugsweise in temporären Dateien zwischengespeichert werden. Sobald die Analyse abgeschlossen ist, werden die temporären Daten wieder gelöscht.

Weitere Einzelheiten, Merkmale und Vorteile der Erfindung werden nachfolgend anhand der Beschreibung der in den Figuren der Zeichnung dargestellten Ausführungsbeispiele näher erläutert. Dabei zeigen:
- Fig. 1: in einem Blockdiagramm die prinzipiellen Komponenten eines erfindungsgemäßen Datenverarbeitungssystems;
- Fig. 2: ein prinzipielles Ausführungsbeispiel einer Kommunikation zwischen ausgewählten Komponenten des erfindungsgemäßen Datenverarbeitungssystems nach Fig. 1;
- Fig. 3: in einem Blockdiagramm ein weiteres prinzipielles Ausführungsbeispiel einer Kommunikation zwischen ausgewählten Komponenten des erfindungsgemäßen Datenverarbeitungssystems nach Fig. 1;
- Fig. 4: ein weiteres prinzipielles Ausführungsbeispiel einer Kommunikation zwischen ausgewählten Komponenten des erfindungsgemäßen Datenverarbeitungssystems nach Fig. 1;
- Fig. 5: in einem Blockdiagramm ein prinzipielles Ausführungsbeispiel einer programmtechnischen Umsetzung einer Kommunikation zwischen ausgewählten Komponenten des erfindungsgemäßen Datenverarbeitungssystems nach Fig. 1;
- Fig. 6: in einem Blockdiagramm ein weiteres prinzipielles Ausführungsbeispiel einer programmtechnischen Umsetzung einer Kommunikation zwischen ausgewählten Komponenten des erfindungsgemäßen Datenverarbeitungssystems nach Fig. 1;
- Fig. 7: prinzipielle Details der Kommunikation nach Fig. 6;
- Fig. 8: in einem Blockdiagramm ein weiteres prinzipielles Ausführungsbeispiel einer programmtechnischen Umsetzung einer Kommunikation zwischen ausgewählten Komponenten des erfindungsgemäßen Datenverarbeitungssystems nach Fig. 1;
- Fig. 9: in einem Blockdiagramm ein weiteres prinzipielles Ausführungsbeispiel einer programmtechnischen Umsetzung einer Kommunikation zwischen ausgewählten Komponenten des erfindungsgemäßen Datenverarbeitungssystems nach Fig. 1;
- Fig. 10: in einem Blockdiagramm ein weiteres prinzipielles Ausführungsbeispiel einer programmtechnischen Umsetzung einer Kommunikation zwischen ausgewählten Komponenten des erfindungsgemäßen Datenverarbeitungssystems nach Fig. 1;
- Fig. 11: in einem Flußdiagramm ein Ausführungsbeispiel für eine Zusammenhangserfassung eines erfindungsgemäßen Datenverarbeitungssystems;
- Fig. 12: in einem Flußdiagramm ein weiteres Ausführungsbeispiel für eine Zusammenhangserfassung eines erfindungsgemäßen Datenverarbeitungssystems;
- Fig. 13: in einem Flußdiagramm ein weiteres Ausführungsbeispiel für eine Zusammenhangserfassung eines erfindungsgemäßen Datenverarbeitungssystems;
- Fig. 14: in einer schematischen Darstellung ein Ausführungsbeispiel einer erfindungsgemäßen mobilen Datenverarbeitungsvorrichtung zur Nutzung eines erfindungsgemäßen Datenverarbeitungssystems;
- Fig. 15: eine weitere schematische Darstellung der erfindungsgemäßen mobilen Datenverarbeitungsvorrichtung nach Fig. 14;
- Fig. 16: eine weitere schematische Darstellung der erfindungsgemäßen mobilen Datenverarbeitungsvorrichtung nach Fig. 14;
- Fig. 17: eine weitere schematische Darstellung der erfindungsgemäßen mobilen Datenverarbeitungsvorrichtung nach Fig. 14;
- Fig. 18: eine weitere schematische Darstellung der erfindungsgemäßen mobilen Datenverarbeitungsvorrichtung nach Fig. 14;
- Fig. 19: in einer schematischen Darstellung ein prinzipielles Ausführungsbeispiel einer erfindungsgemäßen graphischen Benutzerschnittstelle zur Nutzung eines erfindungsgemäßen Datenverarbeitungssystems;
- Fig. 20: in einer schematischen Darstellung ein weiteres prinzipielles Ausführungsbeispiel einer erfindungsgemäßen graphischen Benutzerschnittstelle zur Nutzung eines erfindungsgemäßen Datenverarbeitungssystems;
- Fig. 21: in einer schematischen Darstellung ein weiteres Ausführungsbeispiel einer erfindungsgemäßen mobilen Datenverarbeitungsvorrichtung zur Nutzung eines erfindungsgemäßen Datenverarbeitungssystems;
- Fig. 22: in einer schematischen Darstellung ein weiteres Ausführungsbeispiel einer erfindungsgemäßen mobilen Datenverarbeitungsvorrichtung zur Nutzung eines erfindungsgemäßen Datenverarbeitungssystems;
- Fig. 23: in einer schematischen Darstellung ein weiteres Ausführungsbeispiel einer erfindungsgemäßen mobilen Datenverarbeitungsvorrichtung zur Nutzung eines erfindungsgemäßen Datenverarbeitungssystems;
- Fig. 24: in einem Flußdiagramm ein weiteres Ausführungsbeispiel für eine Zusammenhangserfassung eines erfindungsgemäßen Datenverarbeitungssystems und
- Fig. 25: in einem Flußdiagramm ein weiteres Ausführungsbeispiel für eine Zusammenhangserfassung eines erfindungsgemäßen Datenverarbeitungssystems;

Das das erfindungsgemäße Datenverarbeitungssystem realisierende Hardware- bzw. Softwarekonzept einschließlich der Benutzerführung ergibt sich insbesondere aus der kontextsensitiven Verwaltung von Informationen und/oder Aktionen, derart, dass ein belegbarer Zusammenhang gegeben ist.

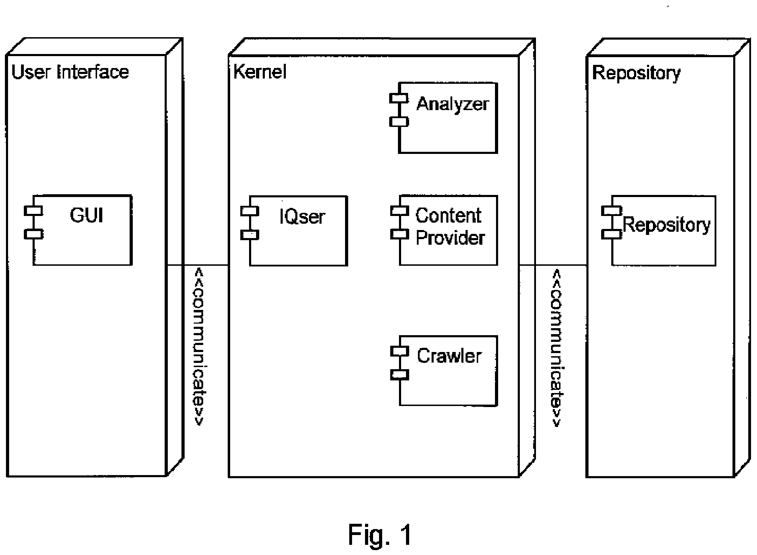

Das Datenverarbeitungssystem besteht aus mehreren Komponenten, die ihrerseits wieder weitere Subkomponenten enthalten. Im Zusammenhang mit den Figuren 1 bis 13 werden nachfolgend die jeweiligen Hauptkomponenten für einen allgemeinen Überblick über die Architektur des Datenverarbeitungssystems beschrieben. Hintergrund der hier dargestellten und beschriebenen Architektur ist, dass die Komponenten nicht zwingend innerhalb einer Anwendung ausgeführt werden müssen, sondern auch eine Aufteilung in verschiedenen Anwendungen und Systemen möglich ist. Dadurch wird sowohl eine sogenannte Standalone- als auch eine sogenannte Client/Server-Anwendung unterstützt.

Wie anhand von Fig. 1 zu erkennen, weist das Datenverarbeitungssystem eine Benutzeroberfläche, einen Kernel und ein sogenanntes Repository auf.

Die Benutzeroberfläche (nachfolgend GUI genannt) ist die Schnittstelle zum Anwender. Die Benutzeroberfläche (GUI) ist dabei derart realisiert und gestaltet, dass die ergonomischen Bedürfnisse des Benutzers bzw. Anwenders vollständig erfüllt werden. Vorliegend ist die Benutzeroberfläche (GUI) plattform- bzw. geräteabhängig und wird dementsprechend für jede Plattform bzw. Datenverarbeitungsvorrichtung an deren Fähigkeiten individuell angepasst. Vorliegend sind beispielsweise Implementierungen der Benutzeroberfläche (GUI) für PC's, PDA's, Web- bzw. HTML-Anwendungen, Mobilfunktelefon- bzw. WML/WAP-Anwendungen vorgesehen, die vorzugsweise mittels oder als JAVA-Anwendungen realisiert werden.

Der Kernel ist der zentrale Applikationskern des Datenverarbeitungssystems, in dem sämtliche Komponenten zusammenlaufen und miteinander verbunden werden. Der Kernel selbst unterteilt sich in weitere Subkomponenten, nachfolgend IQser, Content Provider, Crawler, Logger bzw. Tracker (in Fig. 1 nicht explizit dargestellt) und Analyzer genannt.

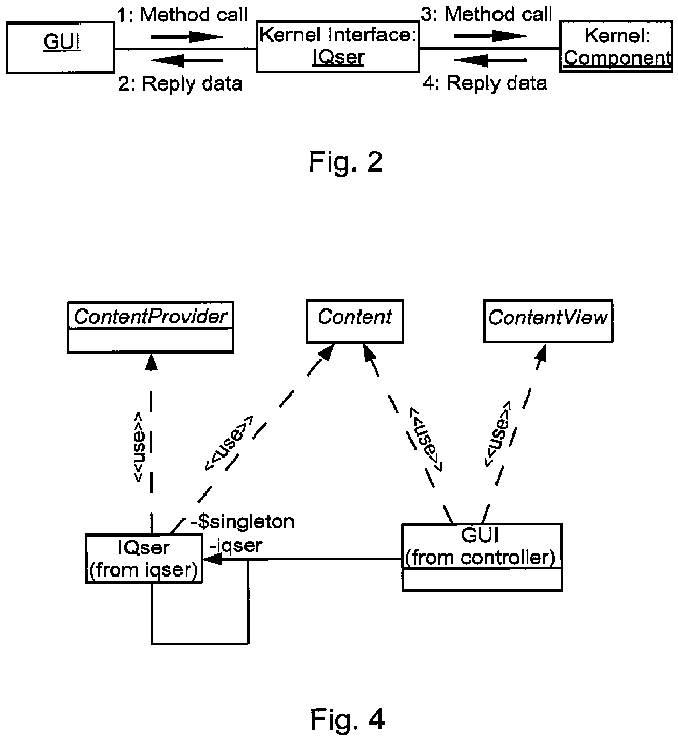

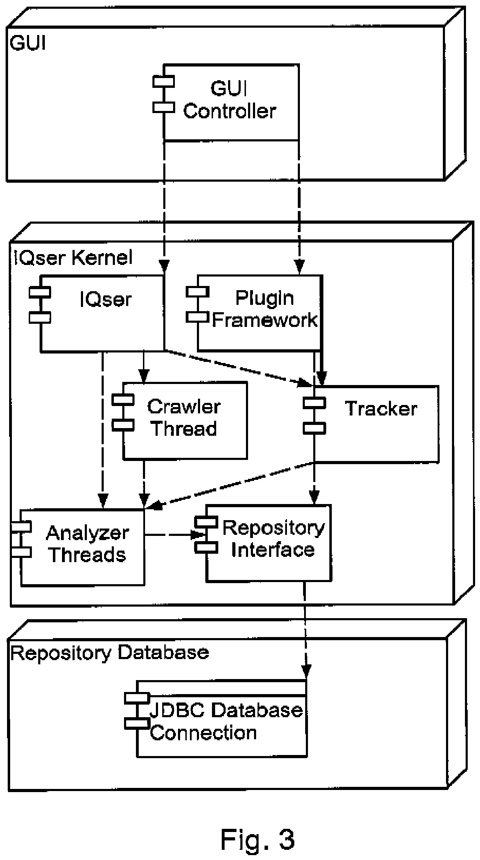

Der Kernel stellt eine Schnittstelle zur graphischen Benutzeroberfläche (GUI) bereit, die nachfolgend IQser-Komponente genannt wird. Dabei werden die jeweiligen Methoden-Aufrufe der Benutzeroberfläche (GUI) an die jeweils zuständigen Komponenten weitergeleitet und bei Bedarf vor der Rückgabe zur Benutzeroberfläche (GUI) entsprechend aufbereitet, wie anhand des in Fig. 2 dargestellten Prinzips ersichtlich. Das Ausführen der jeweils angeforderten Aufgaben gemäß Fig. 2 wird von den dazu jeweils vorgesehenen Komponenten vorgenommen. Fig. 3 gibt einen beispielhaften Überblick über die Verbindungen der einzelnen Komponenten untereinander.

Des weiteren ist die IQser-Komponente die Controller-Instanz, die die Zugriffe auf das Repository bzw. die Repositories regelt sowie die Crawler- und Analyzer-Prozesse steuert. Ferner realisiert die IQser-Komponente vorliegend die Aufgabe, die jeweiligen Content Provider in das System zu integrieren.

Die Komponente Content Provider ist ein abstrakte Komponente. Es handelt sich vorliegend um ein Framwork, dass es ermöglicht jede beliebige Datenquelle in das Datenverarbeitungssystem zu integrieren. Dadurch wird das Gesamtsystem sehr flexibel und lässt sich in die bestehende Infrastruktur des Anwenders einbinden.

Die Crawler-Komponente hat die Aufgabe nach neuen Content-Objekten oder nach Änderungen an bestehenden Objekten zu suchen. Alle Änderungen und Neuerungen werden im Repository synchronisiert, so dass das Repository immer auf dem aktuellen Stand ist. Der von der Crawler-Komponente realisierte Prozess läuft dabei im Hintergrund und wird über ein frei definierbares Intervall gestartet.

Aufgabe der in Fig. 1 nicht explizit dargestellten Logger- bzw. Tracker-Komponente ist es, jede Aktivität des Anwenders mit einem Inhalt (nachfolgend auch Content-Objekt genannt) zu protokollieren. Diese Protokollierung wird benötigt, um im Analyzer später bestimmte Bearbeitungs- bzw. Nutzungsmuster des Anwenders in Beziehung zu verschiedenen Content-Objekten zu erfassen und gegebenenfalls weniger relevante Zusammenhänge (sogenannte "weak links") zwischen Objekten zu erstellen oder zu löschen.

Die Analyzer-Komponente läuft vorliegend als eigentständiger Prozess im Hintergrund des Datenverarbeitungssystems und übernimmt mehrere Aufgaben. Für einen semantischen Vergleich durchsucht die Analyzer-Komponente von der Logger- bzw. Tracker-Komponente protokollierte Aktivitäten bzw. Nutzungen des Anwenders nach Mustern und erzeugt bzw. löscht die genannten Zusammenhänge im Repository. Dadurch kann das Datenverarbeitungssystem dynamisch Zusammenhänge zwischen Inhalten und deren Nutzungen selbstständig erkennen und quasi erlernen. Bei syntaktischen Vergleichen vergleicht die Analyzer-Komponente den tatsächlichen Inhalt eines Datenbestandes (Content-Objekt) auf Textfragmente, die auf andere Datenbestände (Content-Objekte) hinweisen.

Das Datenverarbeitungssystem verweist auf fremde Datenbestände und nutzt diese zur Zusammenhangserfassung. Das können Einträge in fremden Datenbanken sein, zum Beispiel E-Mails oder Adressen, aber auch Dokumente und Objekte des Datenverarbeitungssystems selbst. Folgt der Anwender einem Zusammenhangsverweis öffnet sich der Datensatz oder das externe Dokument in der dafür passenden Applikation. Greift der Anwender über Netzwerkverbindungen auf einen Datenbestand zu, öffnet sich das Dokument beispielsweise in einem zusätzlichen Browserfenster, nachdem es vorher entsprechend von dem Datenverarbeitungssystem konvertiert wurde.

Das Repository ist die Schnittstelle zur Datenhaltung. Hier werden Zusammenhänge und/oder Verweise auf die Datenbestände (Content-Objekte) und deren jeweiligen Verknüpfungen verwaltet. In Fig. 1 ist exemplarisch nur ein Repository dargestellt. Es sind jedoch auch mehere Repositories in das Datenverarbeitungssystem einbindbar, so dass beispielsweise lokale, serverbasierte Zusammenhänge und Datenbestände in das jeweilige Anwendersystem integriert werden können.

Das Datenverarbeitungssystem weist weiter eine Schnittstelle zur Integration von Datenbeständen auf, um jede erdenkliche Art von Inhalten in Form von Informationen repräsentierenden Daten verarbeiten zu können. Da in der Regel nicht von vornherein alle Möglichkeiten und Arten einer Integration von Datenbeständen vorgebbar sind, ist der Content-Provider-Komponente vorliegend als programmierbare Schnittstelle implementiert. Dadurch wird Entwicklern ermöglicht weitere Content-Provider individuell zu programmieren, die dann von dem Datenverarbeitungssystem verwendet werden können. Diese Programmierschnittstelle wird nachfolgend auch Plugin genannt und ist in Fig. 4 dargestellt.

Das Plugin (Fig. 4) besteht aus mehreren Objekten, die vom Entwickler zu implementieren sind:
- ContentProvider: Das ist die Schnittstelle zum Kernel und bietet die Methoden, die für die Verarbeitung von Inhalten notwendig sind.
- Content: Das Content-Objekt ist der eigentliche Inhalt. Es wird dazu verwendet um die Inhalte zwischen den Komponenten auszutauschen.
- ContentView: Die Schnittstelle zur GUI. Hiermit werden die Darstellung und die möglichen Aktionen bzw. Nutzungen der Inhalte implementiert.

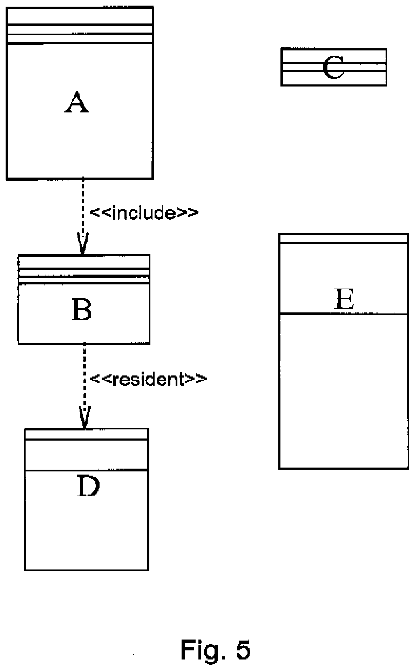

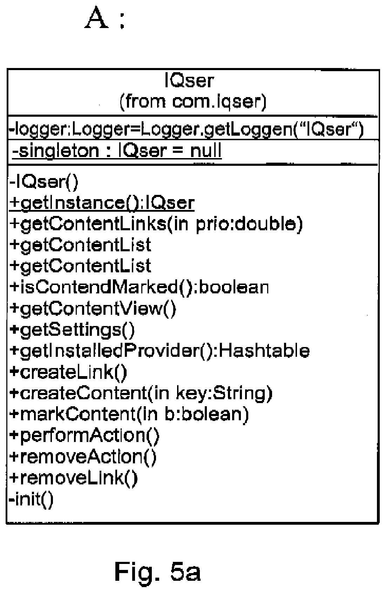

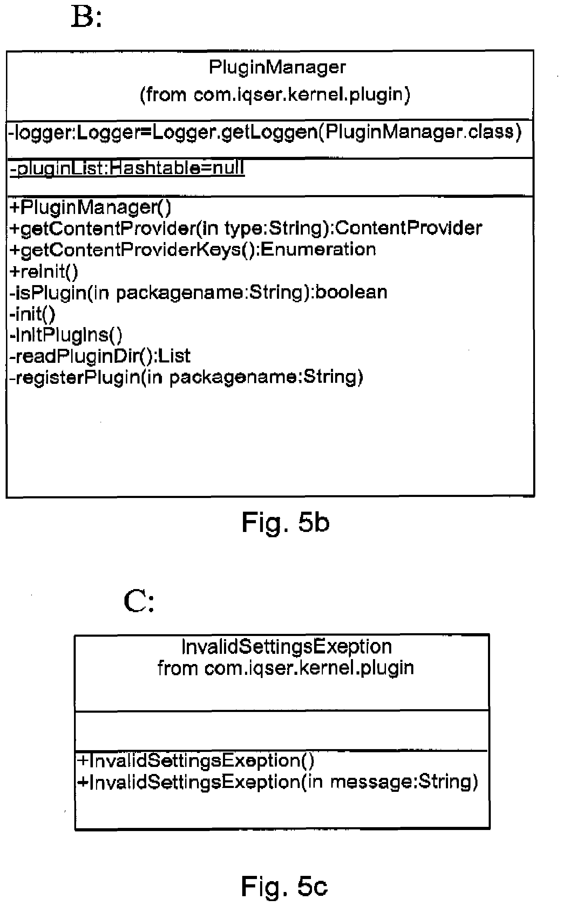

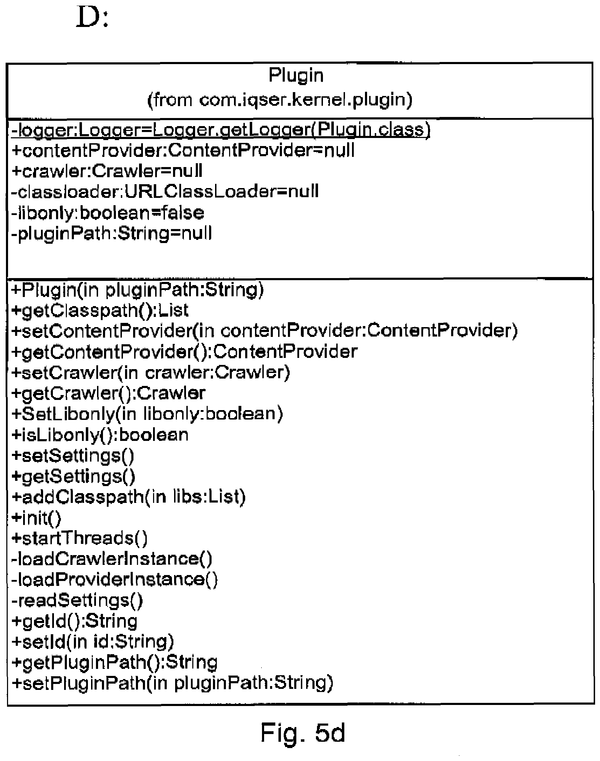

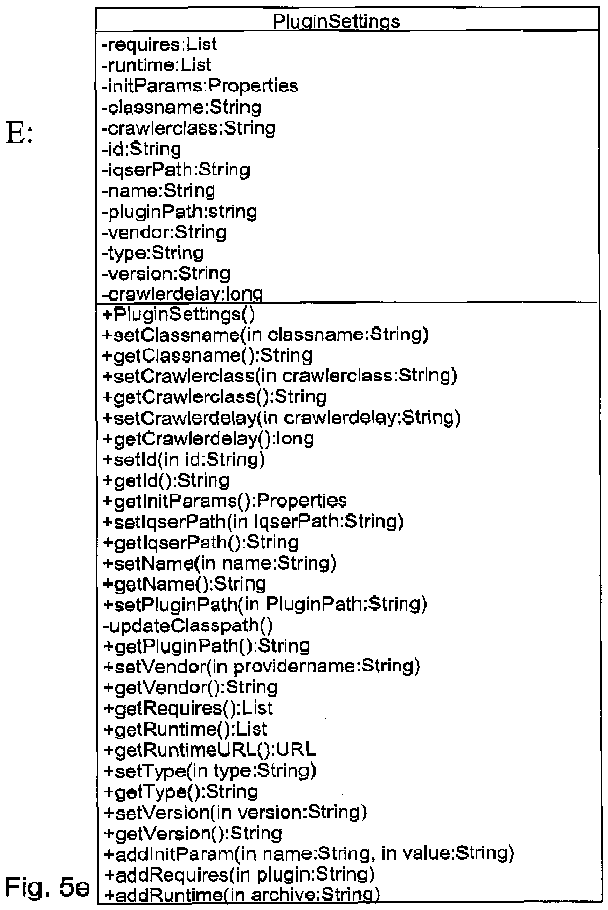

Wie anhand von Fig. 5 zu erkennen, werden Plugins von zwei Objekten verwaltet, dem PluginManager und dem Plugin. Der PluginManager hat die Aufgabe, bei Start der IQser-Komponente des Datenverarbeitungssystems nach installierten Plugins zu suchen, vorhandene Plugins zu laden und zu initialisieren. Das Plugin selbst wird dabei vorliegend als Datencontainer verwendet. Es enthält eine Instanz des ContentProviders und die Konfiguration des jeweiligen Plugins.

Für die Entwicklung eines neuen Plugins sind vom Entwickler die Objekte ContentProvider, Content und ContentView zu implementieren. Die Konfiguration eines Plugins erfolgt über eine Datei (vorliegend plugin.xml), die im jeweiligen Plugin-Verzeichnis vorhanden sein muss. Fehlt sie, wird das Verzeichnis von der vorliegend als IQser bezeichneten Komponente des Datenverarbeitungssystems nicht als Plugin übernommen.

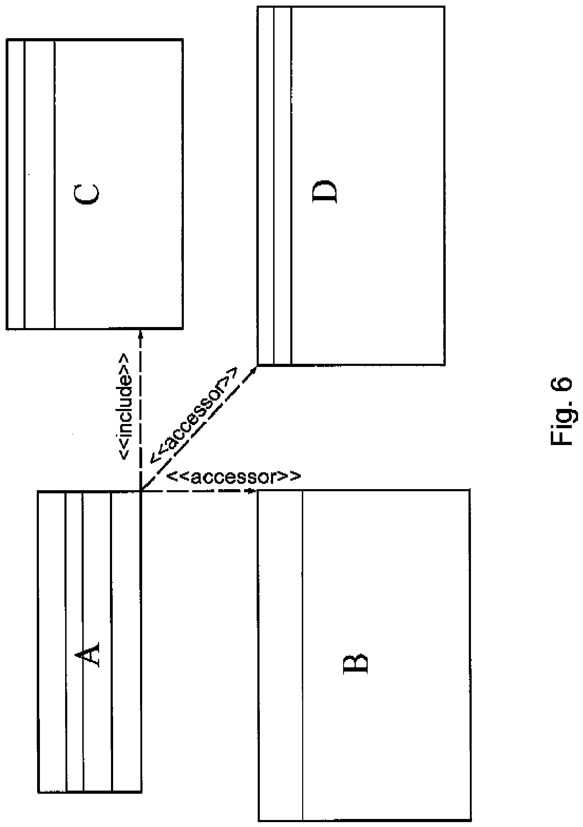

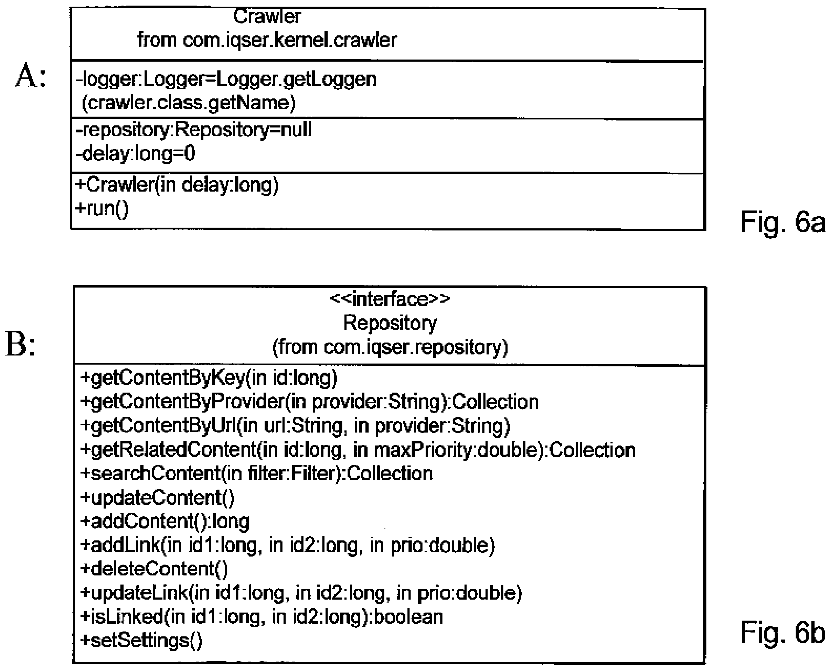

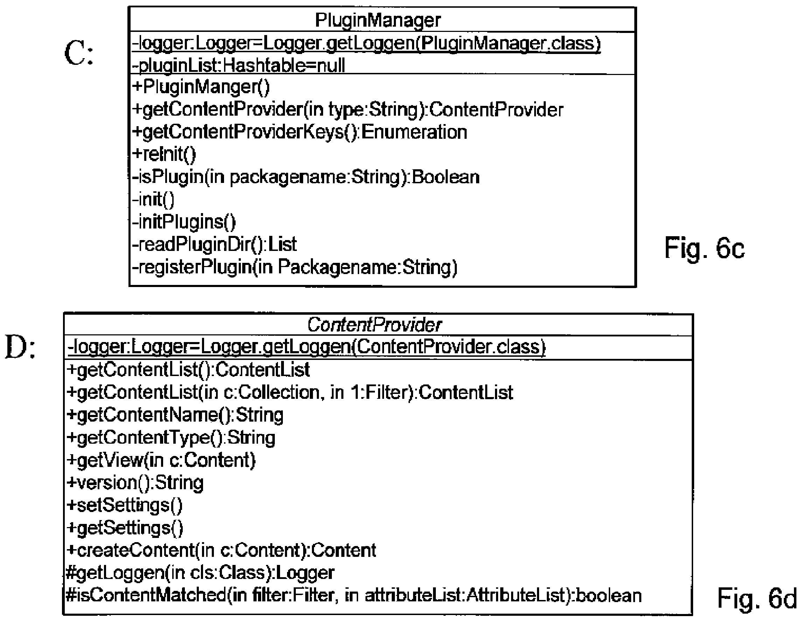

In Fig. 6 sind beispielhaft die von der Crawler-Komponente realisierten Prozesse, die im Hintergrund der Anwendung des Datenverarbeitungssystems ablaufen dargestellt. Dabei werden die Datenbestände nach neuen und veränderten Inhalten durchsucht und diese beispielsweise in Form einer Tabelle zur Analyse gespeichert. Die Prozesse werden dabei vorliegend mit einer niedrigen Priorität in periodischen Abständen ausgeführt.

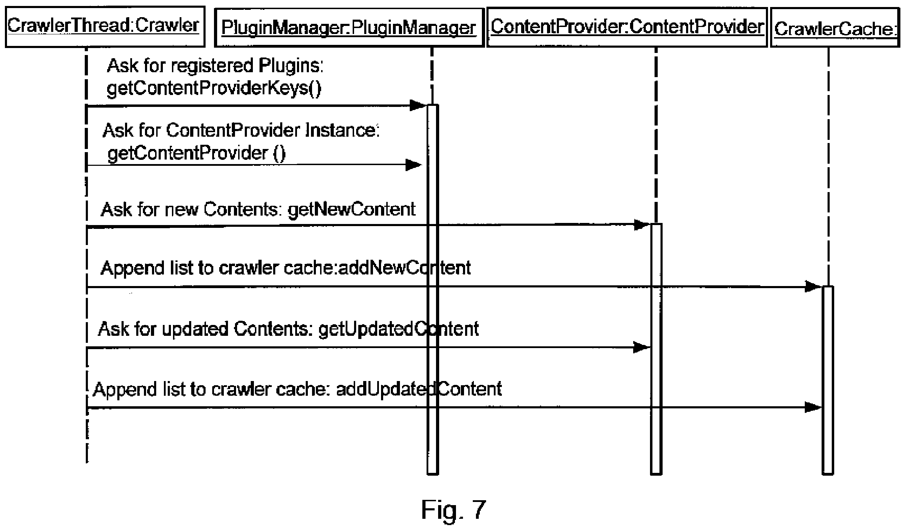

Wie anhand der Darstellung in Fig. 7 zu erkennen ist, holt sich der sogenannte Crawler vom PluginManager die Liste der installierten Plugins und arbeitet diese sukzessive ab. Jeder ContentProvider eines Plugins wird dabei nach neuen oder geänderten Content-Objekten abgefragt. Der ContentProvider liefert jeweils eine Liste mit Content-Ids zurück. Diese Listen werden vom Crawler dann in einer Cache-Tabelle gespeichert. Die Tabelle wird von den Analyzern dann wiederum abgearbeitet.

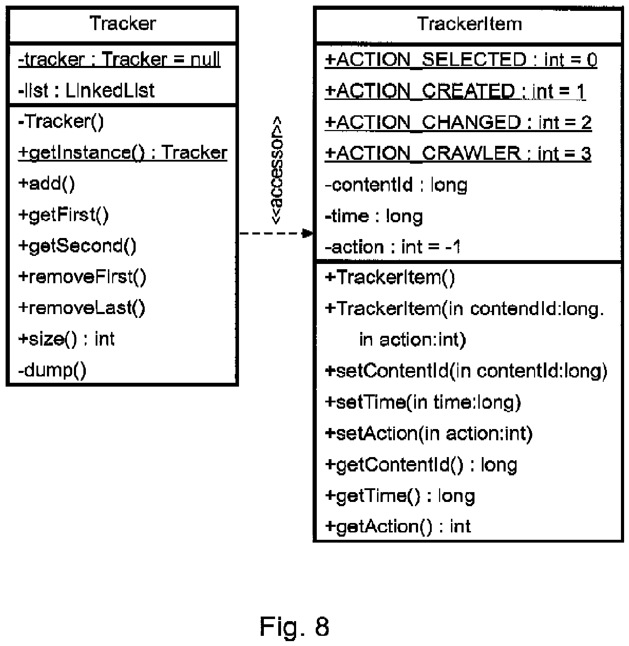

Die Aufgabe der sogenannten, in Fig. 8 beispielhaft dargestellten Logger- bzw. Tracker-Komponente ist ähnlich der der Crawler-Komponente. Der Tracker bzw. Logger protokolliert die Aktionen des Anwenders zu Content-Objekten. Durch diese Protokollierung werden später durch den InterestAnalyzer Muster in der Bearbeitung und/oder Nutzung von Inhalten erfasst und einer weiteren Nutzung zugeführt. So können Zusammenhänge zwischen Inhalten dynamisch erzeugt werden. Diese Zusammenhänge werden niedrig gewichtet und werden, sobald sie für einen längeren, vorgebbaren Zeitraum nicht verwendet wurden, durch Freigabe quasi wieder vergessen. Der Zeitraum, über den der Tracker bzw. Logger die Aktivitäten protokollieren soll, ist konfigurierbar. Je geringer der Zeitraum, umso schneller ist auch die Verarbeitung. Je länger der Zeitraum, umso höher ist die Möglichkeit Bearbeitungs- bzw. Nutzungsmuster zu erfassen.

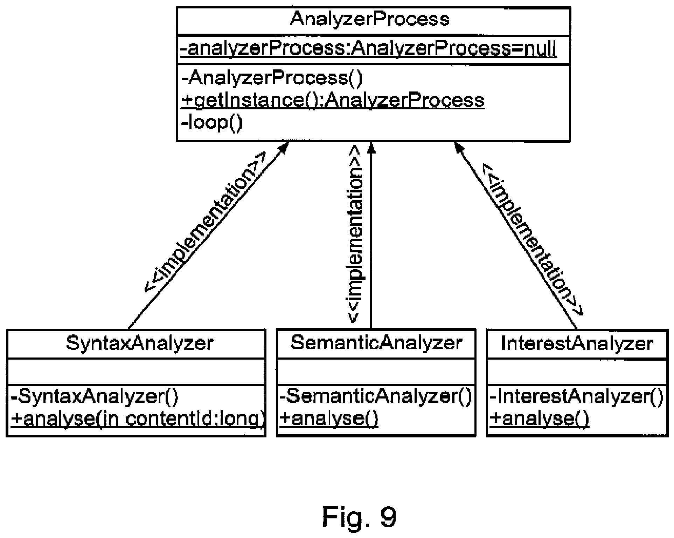

Der in Fig. 9 dargestellte Analyzer ist ein Prozess der im Hintergrund des Datenverarbeitungssystems die vom Crawler "gefundenen" Inhalte nach verschiedenen Kriterien analysiert. Der Analyzer selbst besteht vorliegend wiederum aus nachfolgenden Unterkomponenten bzw. -prozessen:
- IndexAnalyzer: Analysiert die Inhalte nach Stichworten, die für die Zusammenhangserfassung notwendig sind.
- SemanticAnalyzer: Analysiert die Inhalte nach semantischen Kriterien um Verbindungen zwischen Inhalten zu erfassen.
- SyntaxAnalyzer: Analysiert die Inhalte auf syntaktische Verbindungen zu anderen Inhalten
- InterestAnalyzer: Analysiert Inhalte nach Mustern in der Bearbeitung bzw. der Nutzung durch den Anwender.

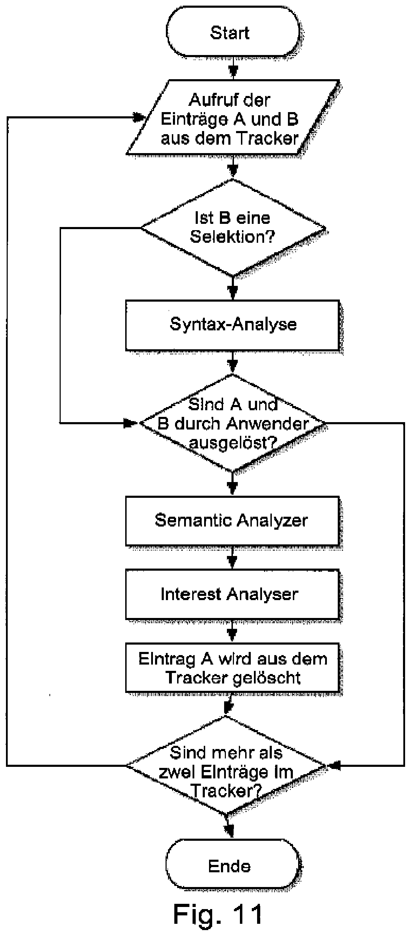

Wurden mindestens zwei Ereignisse im Protokoll (Tracker) eingetragen, kann eine Analyse mit dem Aufruf des Analyseprozesses beginnen. Dafür betrachtet der Analyzer die ersten beiden Einträge des Protokolls. Handelt es sich beim zweiten Eintrag nicht um ein Ereignis, dass durch die Auswahl (zum Beispiel: "zur Anzeige") eines Inhaltes ausgelöst wurde, startet die Syntaxanalyse (vgl. Fig. 11). Handelte es sich um einen Zusammenhang (nachfolgend auch Selektion geannnt), wird die Syntaxanalyse übersprungen. Handelt es sich bei beiden Einträgen um ein Ereignis, das durch den Anwender ausgelöst wurde, werden beide Inhalte vorliegend jeweils im Semantik- und Interest-Analyser und untersucht. Anschließend können weitere Analyseschritte folgen. Sind alle Analyseschritte durchgeführt, wird der erste Eintrag gelöscht. Nun wiederholt sich der gesamte Prozess bis nur noch ein Eintrag im Protokoll vorhanden ist.

In Fig. 24 ist dazu beispielsweise der Prozess eines sogenannten Metaanalyzers dargestellt. Der Metaanalyzer überprüft, ob die Zahl der Verknüpfungen zu einem untersuchten Inhalt einen Grenzwert n überschreitet. Wenn nicht, wird überprüft, ob es einen Meta-Inhalt gibt, der - wenn er existiert - gelöscht werden muss. Ist der Grenzwert erreicht, wird zunächst auch überprüft, ob es einen Metainhalt gibt. In beiden Fällen werden alle verknüpften Inhalte zusammengeführt und zusammengefasst. Gab es schon einen Metainhalt, wird dieser durch die Zusammenfassung aktualisiert. Gab es noch keinen Metainhalt, wird ein solcher erstellt und in einer Datenbank hinterlegt.

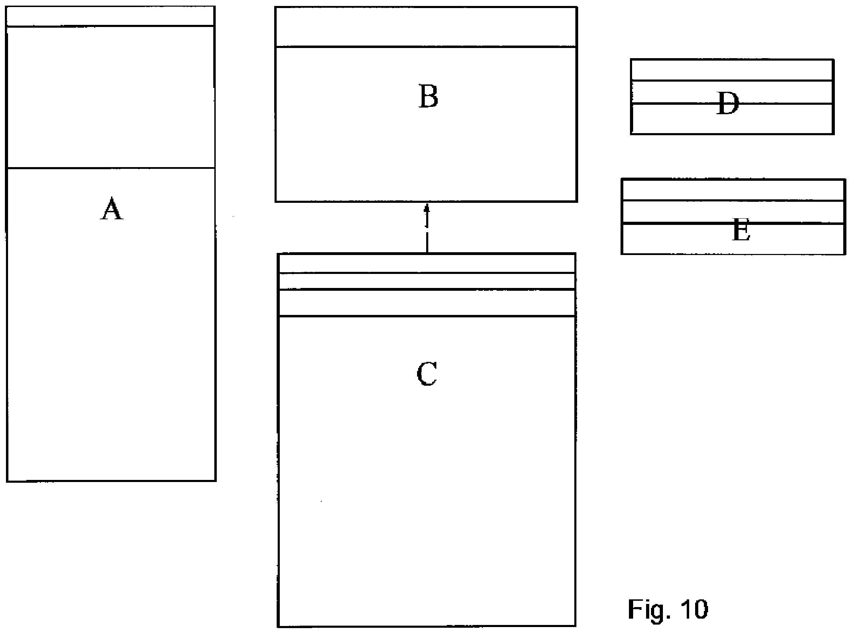

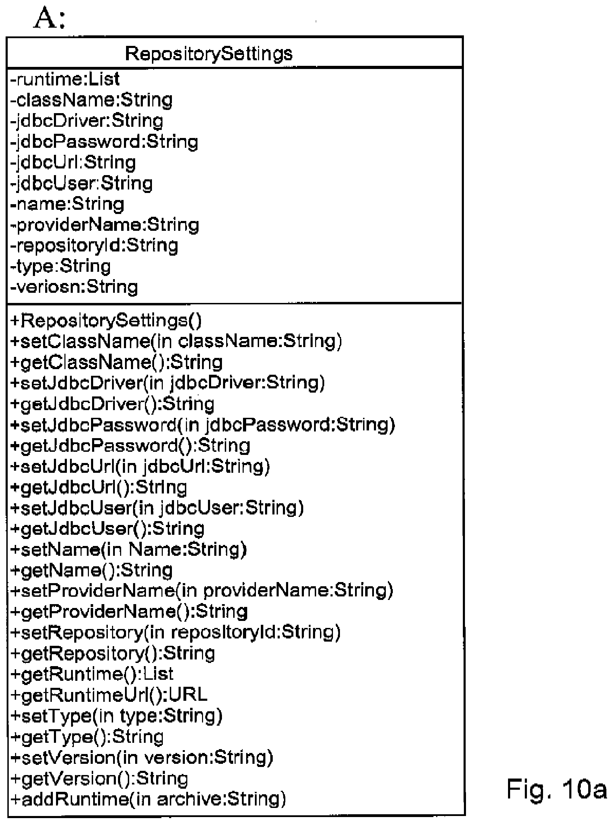

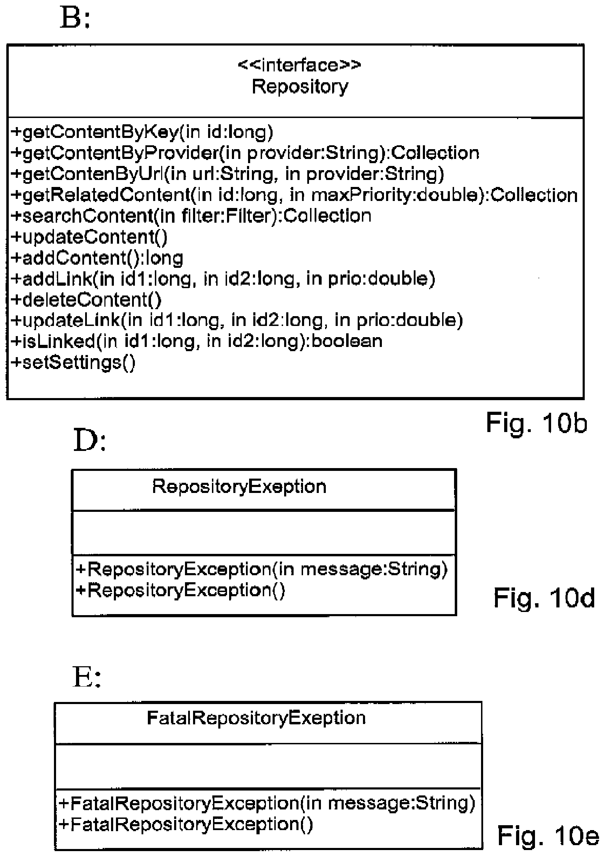

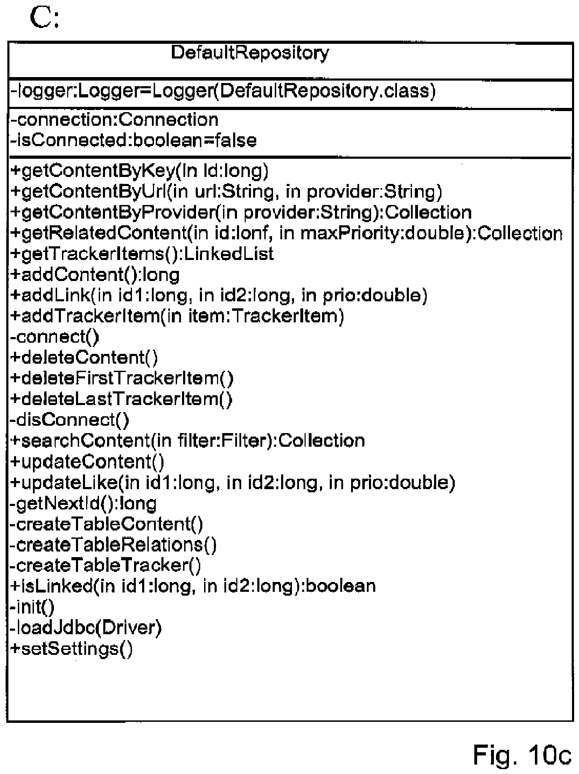

Das in Fig. 10 beispielhaft im Detail dargestellte Repository ist die Schnittstelle zu den Datenbeständen. Es übernimmt die Speicherung aller für den Kernel relevanten Daten, vorliegend sind dies insbesondere:
- Ein Index zu allen Inhalten.
- Zusammenhänge bzw. Verknüpfungen von Inhalten zu anderen Inhalten.
- Temporäre Informationen zur Reihenfolge von der Bearbeitung von Inhalten durch den Anwender (Tracker).
- Temporäre Informationen zu neuen und veränderten Inhalten (Crawler).
- Ein Index über alle Schlüsselwerte der Inhalte (Wichtung).

Beim Start der Semantik-Analyse wird überprüft, ob es bereits eine Verknüpfung zwischen den beiden Inhalten gibt. Gibt es keine wird eine Verknüpfung mit einem niedrigen Wert größer 0 für die Gewichtung erstellt. Gibt es bereits eine Verknüpfung fragt der SemantikAnalyzer, ob die Gewichtung kleiner 1 ist. Ist dieser Wert 1, wird die Analyse abgebrochen, ist sie kleiner 1, wird sie fortgesetzt. Nun wird die Gewichtung der Verknüpfung um einen kleinsten Wert größer 0 erhöht. Im Anschluss daran wird überprüft, ob die resultierende Gewichtung größer oder gleich 1 ist. Ist der Wert kleiner 1 ist die SemantikAnalyse beendet. Ist der Wert größer oder gleich 1, wird die Gewichtung auf einen größten Wert kleiner 1 herabgesetzt. Im Anschluss daran werden alle weiteren bestehenden Verknüpfungen aufgerufen und deren Gewichtung um einen Faktor herabgesetzt, der der Herabsetzung der aktuell untersuchten Verknüpfung entspricht. Der SemantikAnalyzer wird anschließend beendet.

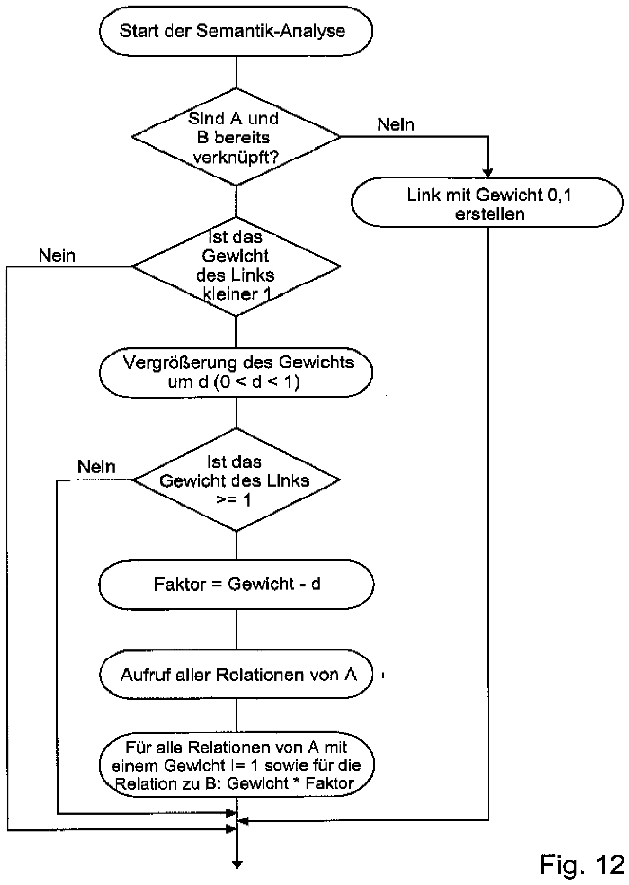

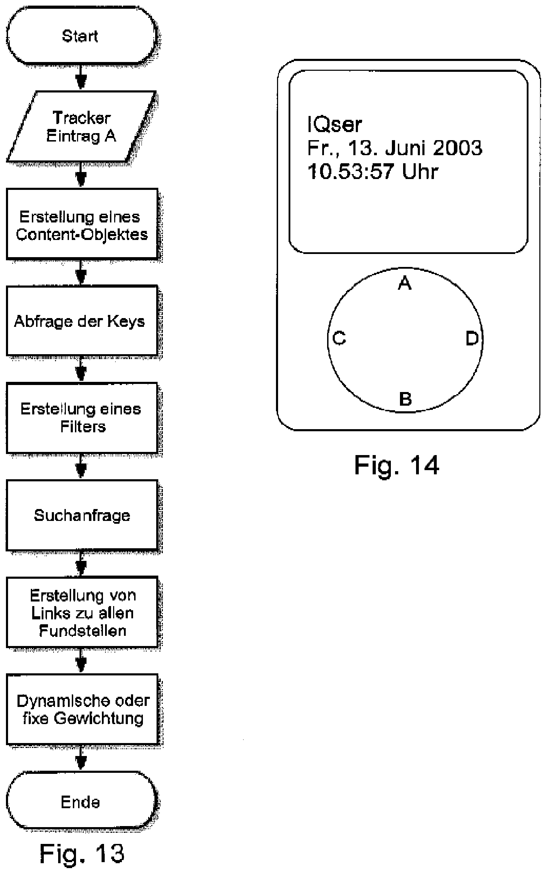

Fig. 11 zeigt den iterativen Analyseprozess der Zusammenhangserfassung. Dabei werden vorliegend - wie bereits erläutert - verschiedene Analyseprozesse kombinativ angewandt. Im Rahmen der Zusammenhangserfassung wird der Analyseprozess von einem Eintrag im Tracker (Ereignisprotokoll) gestartet und ist beendet, wenn nur ein Eintrag im Tracker verbleibt. Wie oben bereits erläutert, hat die Analyzer-Komponente die Aufgabe, die Zusammenhänge zwischen den Inhalten selbstständig zu erkennen. Dafür verwendet das Datenverarbeitungssystem kombinativ insbesondere eine syntaktische und semantische Analyse. Fig. 12 zeigt den Ablauf der oben bereits erläuterten Prozesse im Rahmen einer semantischen Analyse. Fig. 13 zeigt die prinzipielle Struktur der Prozesse im Rahmen einer syntaktischen Analyse.

In Fig. 11 sind die prinzipiellen von der Analyzer-Komponente realisierten Verfahrensschritte dargestellt. Im Rahmen des Aufrufs der Analyzer-Komponente werden Logfiles oder die Datenbankeinträge (Logs) nach der zeitlichen Folge, in der die einzelnen Positionen geschrieben wurden abgearbeitet. Wurden auf diese Weise Einträge abgearbeitet, werden diese aus der Liste gelöscht, wobei jedoch wenigstens die letzte Aktion gespeichert bleibt. Wie lang die Liste der Aktionen im Logfile bzw. der Datenbanktabelle ist, richtet sich also danach, wie schnell der Analyzer arbeitet bzw. wieviel Rechnerleistung dem sekundären Thread zugewiesen wird. Priorität hat immer der Threat der IQser-Komponente bzw. die Aktionen, die der Anwender des Datenverarbeitungssystems durchführt. Sobald eine neue Aktion im Logfile geschrieben wird und der Analyzer noch nicht aktiv war, beginnt die Analyse zur Zusammenhangserfassung. Folgende Situationen können dabei zum Aufruf des Analyzers führen:
- Beim Start des Datenverarbeitungssystems sind bereits mindestens zwei Einträge aus der letzten Session im Log.
- Der Crawler hat neue Inhalte identifiziert, beispielsweise durch ein neues Plugin.
- Der Anwender erzeugt einen neuen Inhalt.
- Der Anwender wählt einen Inhalt aus einer aufgerufenen Liste.

Der SyntaxAnalzer ermittelt die Regeln für die Syntax-Analyse durch den Aufruf der "Schlüssel" (Keys) für den jeweils zu untersuchenden Inhalt. Jene "Schlüssel" sind Attribute, die beschreiben, welche Informationsbausteine (Datenfelder) und Datentypen für die Ermittlung von Sinnzusammenhängen genutzt werden sollen. Aus den Keys stellt der Analyzer einen Filter zusammen, der eine Suche über den insgesamt erfassten Datenbestand auslöst. Zu den gefundenen Inhalten wird schließlich eine Verknüpfung hergestellt, die in Abhängigkeit von der Implementierung und den Anforderungen des Anwenders mit 1 oder einem größten Wert kleiner 1 oder der Treffergenauigkeit gewichtet wird.

Wie bereits erläutert, können alle Inhalte mit beliebigen und beliebig vielen anderen Inhalten in Zusammenhängen verknüpft werden. Zusammenhänge sind sowohl kategorieübergreifend als auch innerhalb einer Kategorie möglich. Zum Beispiel lassen sich Adressen mit Adressen aber auch Adressen mit Projekten verknüpfen. Eine hierarchische Ordnung gibt es nicht. Das Datenverarbeitungssystem unterscheidet statische und dynamische Verknüpfungen für Zusammenhänge bzw. deren Erfassung. Statische Verknüpfungen werden immer angezeigt und können vom Anwender hergestellt und bearbeitet werden. Dynamische Verknüpfungen stellt das System mit einer Gewichtung automatisch her. Als Kriterien der Gewichtung dienen:
- Die Häufigkeit des Aufrufs eines Inhaltes.
- Die Häufigkeit des Aufrufs von Inhalten in dem von dem Zusammenhang hergestellten Kontext.
- Das Alter des letzten Aufrufs des Zusammenhangs oder der verknüpften Inhalte.

Bei Suchergebnissen einer Zusammenhangsanfrage gibt es darüber hinaus eine Gewichtung nach der Häufigkeit des gesuchten Inhaltes im jeweiligen Zusammenhang.

Es gibt - wie bereits erläutert - einen internen Schwellenwert, nach dem eine dynamische Verknüpfung angezeigt wird oder nicht. Der Wert (Gewichtung) ändert sich in Abhängigkeit des Benutzerverhaltens bzw. der Auswertung des Protokolls aller Aktionen, die der Anwender mit dem Datenverarbeitungssystem durchführt.

Im Datenverarbeitungssystem werden die Zusammenhänge als dynamisch verknüpfte Objekte abgebildet.

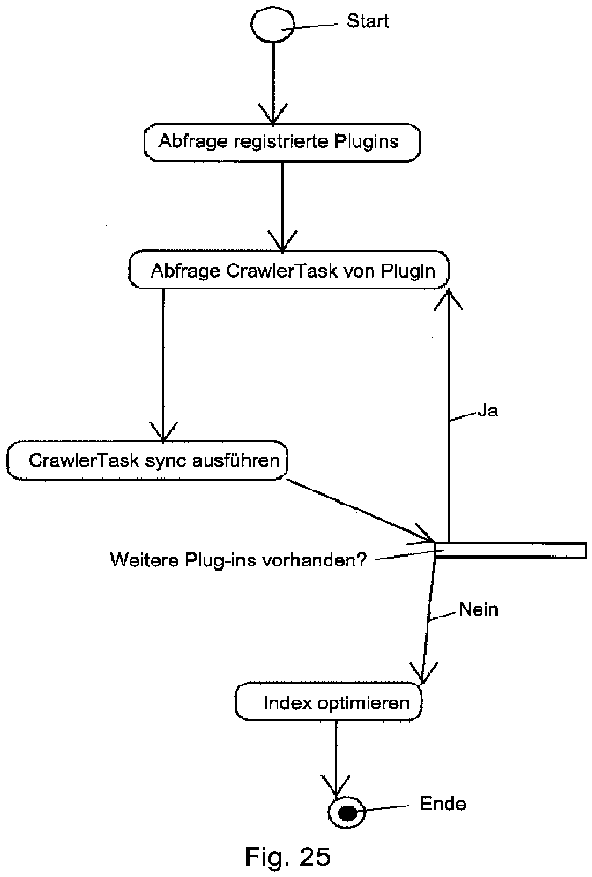

Fig. 25 zeigt und beschreibt exemplarisch wie für die Identifizierung neuer Inhalte das entsprechende Plug-in nach einem Crawler Task abgefragt wird. Technisch gesehen handelt es sich bei diesem Synchronisationsprozesse realisierenden Teilsystem um eine sogenannte Klasse, die die jeweiligen Datenquellen des Plug-ins nach neuen, gelöschten oder generierten Zusammenhängen abfragt.

In den Fig. 14 bis 18 ist die Frontansicht bzw. Vorderseite einer das erfindungsgemäße Datenverarbeitungssystems nutzenden Datenverarbeitungsvorrichtung zur elektronischen Verarbeitung von Daten dargestellt. Die eine Kontroll- und/oder Recheneinheit, eine Eingabeeinheit und einer Ausgabeeinheit aufweisende Datenverarbeitungsvorrichtung, ist vorliegend als ein mobil nutzbares Endgerät (mobiles Endgerät) ausgebildet.

Die ein im wesentlichen rechteckförmig ausgebildetes Gehäuse aufweisende Datenverarbeitungsvorrichtung weist in einem oberen Bereich ein als Ausgabeeinheit dienendes Display und in dem darunter angeordneten Bereich ein als Eingabeeinheit dienendes scheiben- bzw. radförmig ausgebildetes Bedienelement (Navigationsrad) auf, welches sich mit und gegen den Uhrzeigersinn drehen lässt. Diese Verdrehbewegungen des Bedienelementes ermöglichen es, Einträge aus einer seitens des Display wiedergegebenen Liste durch sogenanntes "scrollen" zu durchlaufen. Vorliegend führt eine Verdrehung des Bedienelementes mit dem Uhrzeigersinn zu einer Abwärtsbewegung in der vertikal angeordnete Listeneinträge aufweisenden Liste und eine Verdrehung des Bedienelementes gegen den Uhrzeigersinn zu Aufwärtsbewegung in der vertikal angeordnete Listeneinträge aufweisenden Liste. Das Bedienelement ist vorteilhafterweise derart verdrehbar gelagert, das ein Anwender bei jedem durch verdrehen des Bedienelementes angewählten Listeneintrag einen leichten Widerstand spürt. Dazu weist die Lagerung des Bedienelementes vorteilhafterweise eine dem Bedienelement eine Art Rastung verleihende Vorrichtung auf, mit der das Bedienelement in einzelnen Drehpositionen leicht einrastet.

Das scheiben- bzw. radförmig ausgebildete und verdrehbar gelagerte Bedienelement (Navigationsrad) ist weiter auf einer zwischen vier Endpositionen verschwenkbaren Wippmechanik angeordnet. Die vier in Fig. 14 mit A, B, C und D gekennzeichneten Endpositionen sind nach Art eines Druckpunktes durch Verschwenken des verdrehbar gelagerten Bedienelementes in die jeweilige Richtung einnehmbar. Die Druckpunkte werden dabei jeweils mittels Taster in umgesetzt. Über die Druckpunkte A, B, C und D sind dabei als Auswahl- und/oder Bedieneingaben durch Verschwenkung des Bedienelementes nutzbar. Vorliegend sind die mit A, B, C und D gekennzeichneten Druckpunkte mit folgenden Funktionen belegt:
- Druckpunkt A führt immer zu einer Übersicht der Inhalte bzw. Inhaltskategorien, die der Anwender über seine mobil nutzbare Datenverarbeitungsvorrichtung abrufen kann.
- Druckpunkt B führt immer zu einer Übersicht der möglichen Aktionen, insbesondere dem Anlegen von neuen Inhalten.
- Druckpunkt C führt einen Schritt zurück. In der Darstellung seitens des Displays wird dabei die jeweils vorherige Darstellung wiedergegeben, beispielsweise sich von links her in das Display einschiebend.
- Druckpunkt D führt zu neuen Inhalten, die mir dem hervorgehobenen Listeintrag verknüpft sind. In der Darstellung seitens des Displays wird dabei der jeweils entsprechend dem ausgewählten Listeneintrag verknüpfte Zusammenhang bzw. Inhalt wiedergegeben bzw. dargstellt, beispielsweise sich von rechts her in das Display einschiebend.

Die Druckpunkte C und D können vorliegend in unterschiedlichen Situationen bzw. Kontexten unterschiedliche Funktionen realisieren bzw. haben. Im Falle einer Telefonieanwendung können die Druckpunkte beispielsweise die Funktionen von Gesprächsannahme, -ablehnung oder -beendigung übernehmen.

Der in der Mitte des Bedienelementes ausgebildete Druckpunkt des Bedienelementes führt zu einer Auswahleingabe des jeweils angewählten Inhalts und/oder der jeweiligen Handlungsoption.

Mit diesem nach Art eines Navigationsrades ausgebildeten Bedienelement der Datenverarbeitungsvorrichtung ist diese ohne weitere Bedienungselemente zu benötigen bedienbar, insbesondere einhändig mit dem Daumen einer Hand.

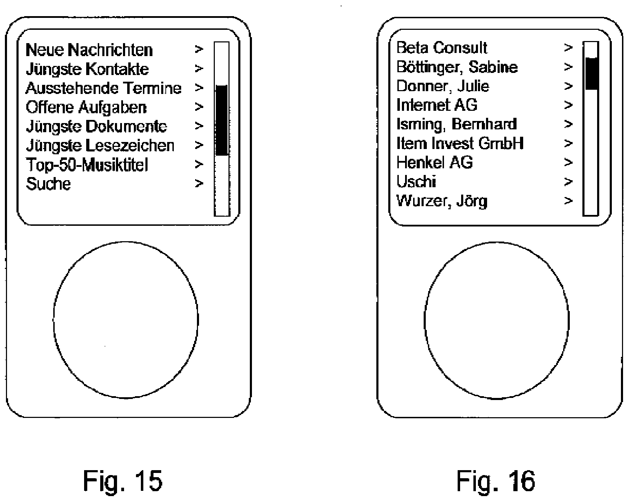

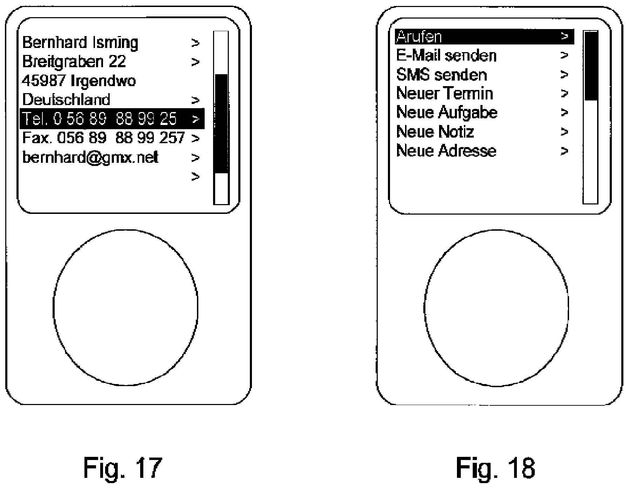

Fig. 15 zeigt ein Beispiel für die Auswahl von Inhalten der mobil nutzbaren Datenverarbeitungsvorrichtung. Der im Display rechts neben den Inhalten dargestellte Pfeil ">" signalisiert dem Anwender, dass mit der Auslösung des Tasters gemäß Druckpunkt D weitere Inhalte aufrufbar und anzeigbar sind, vorliegend beispielhaft Kontatkeintragungen aus einer Liste wie anhand der Darstellung von Fig. 16 zu erkennen. Fig. 17 zeigt dann eine weitere Darstellung bei Auswahl eines Eintrags durch nochmalige Betätigung des Tasters gemäß Druckpunkt D. Vorliegend ist der dadurch ausgewählte Eintrag gemäß Fig. 15 durch vorherige Betätigung des Tasters gemäß Druckpunkt B angewählt worden. Fig. 18 zeigt die entsprechende Anzeige bei weiterer Auswahl und Aktivierung entsprechend den Tastern der Druckpunkte B und D und entsprechende Handlungsoptionen, vorliegend beispielsweise "Anrufen".

Für Texteingaben werden seitens des Displays eingebbare alphanumerische Zeichen zur An- und/oder Auswahl angezeigt, wobei beispielsweise durch Drehen des Bedienelementes diese einzeln anwählbar und durch die Taster gemäß den Druckpunkten A, B, C oder D auswählbar sind.

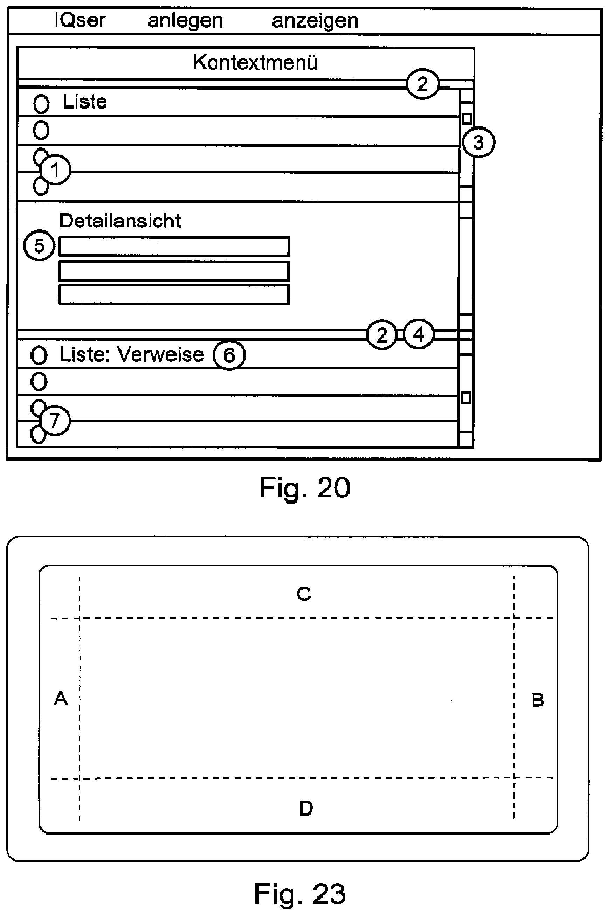

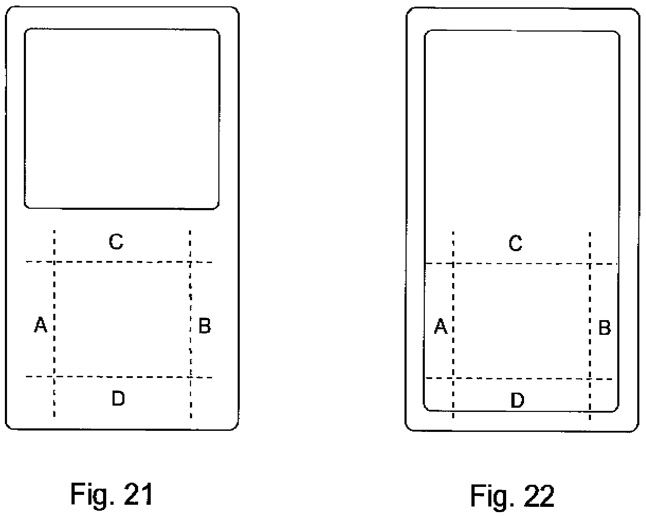

Bei weiteren, in Fig. 21, 22 und 23 dargestellten Ausführungsformen einer mobil nutzbaren Datenverarbeitungsvorrichtung wird für die Steuerung eine berührungsempfindliche Fläche (Fig. 21), bzw. ein sogenannten Touchscreen (Fig. 22 und Fig. 23) verwendet. Bei der Ausführungsform gemäß Fig. 21 ist die berührungssensitive Fläche unterhalb des Displays angeordnet. Bei den Ausführungsformen gemäß Fig. 22 und Fig. 23 ist das Display als Touchscreen ausgebildet und bildet dementsprechend die berührungssensitive Fläche selbst.

Bei den Ausführungsformen gemäß Fig. 21, 22 und 23 ist die zur Steuerung vorgesehene berührungssensitive Fläche in fünf Bereiche unterteilt, die hinsichtlich der Bedienung die Funktionalitäten entsprechend der Ausgestaltung des Bedienelementes als verdreh- und verschwenkbares Rad gemäß der in den Figuren 14 bis 18 dargestellten Datenverarbeitungsvorrichtung realisieren.

Die zentrale Fläche ist von vier Flächen mit der Bezeichnung A, B, C, und D umgeben. Die Bewegungen auf der sensitiven Fläche werden auf dem Display ähnlich einer Positionsmarke (Cursor) eines Betriebssystems umgesetzt. Eine Bewegung nach unten bewirkt, dass die Listeneinträge auf dem Display nacheinander, von oben nach unten ausgewählt werden. Die Bewegung von unten nach oben hat die entgegengesetzte Wirkung. Verbleibt der Anwender mit der Berührung im Feld C wird die Bewegung auf dem Display forgesetzt. Das gilt entsprechend, wenn der Anwender mit seiner Berührung im Feld D bleibt. Verbleibt der Anwender mit der Berührung im Feld B zeigt das Display die Inhalte an, die mit dem aktuellen Listeneintrag verknüpft sind. Mit welcher Verzögerung die Funktion ausgeführt wird, ist flexibel, und beträgt vorliegend beispielsweise ein bis zwei Sekunden. Verbleibt der Anwender im Feld A wird die zuletzt aufgerufene Liste angezeigt.

Die berührungssensitive Fläche ist vorteilhafterweise mit einer flexiblen Oberfläche ausgestattet, die in der Mitte und in den Feldern A, B, C und D jeweils einen Druckpunkt besitzt. In einer weiteren Ausgestaltung der Erfindung ist die Datenverarbeitungsvorrichtung ausgebildet, die Geste einer kurzen Berührung in diesen Feldern zu erkennen. Beide Ausgestaltungen führen zu einer Auswahl.

Die Auswahl in den Feldern A bzw. B führt zu der zuletzt angezeigten Liste bzw. zu den Verknüpfungen, wie in den vorhergehenden Abschnitten bereits beschrieben. Eine Auswahl im Feld C führt zu einer allgemeinen Auswahlliste von Inhalten, insbesondere im Sinne einer erfindungsgemäßen binären Navigation, während die Auswahl in der Fläche D zu den möglichen Handlungsoptionen führt. Eine Auswahl in der Mitte der Fläche führt zur Auswahl des aktuell hervorgehobenen Inhaltes einer Liste.

Bei den Ausführungformen gemäß Fig. 22 und Fig. 23 nimmt das berührungsempfindliche bzw. sensitive Display (Touchscreen) die gesamte Gerätefront ein. Der Anwender kann je nach Anwendung gezeigte Objekte auf dem Display direkt anwählen, vorteilhafterweise beispielsweise die Tasten einer virtuellen Tastatur und/oder Listeneinträge durch ein Antippen, wie oben bereits erläutert. Die Logik der Navigationsfläche bleibt dabei erhalten. Bei der in Fig. 23 dargestellten Ausführungsform einer mobil nutzbaren Datenverarbeitungsvorrichtung werden Inhalte im Querformat angezeigt.

Das erfindungsgemäße Datenverarbeitungssystem stellt ferner eine geräteübergreifende Mensch-Maschine-Schnittstelle für die Anzeige, Bearbeitung und Steuerung komplexer Inhalte bzw. Datenbestände und deren Zusammenhänge bereit, insbesondere um den Anforderungen hinsichtlich einer transparenten Steuerung zur Modifikation von großen Datenbeständen und deren Zusammenhängen zu genügen und eine solche insbesondere für den ungeschulten Anwender verständlich und im Vergleich zu anderen Systemen einfacher zu machen. Vorteilhafterweise sind die von der Mensch-Maschine-Schnittstelle genutzte Logik und Ergonomie unabhängig von den für oder mit dem erfindungsgemäßen Datenverarbeitungssystem genutzten Datenverarbeitungsvorrichtungen oder -endgeräten, beispielsweise deren Ausgabeeinheiten wie Monitore oder Displays.

Vorteilhafterweise wird mit der Mensch-Maschine-Schnittstelle des erfindungsgemäßen Datenverarbeitungssystems eine handlungsorientierte Steuerung des Datenverarbeitungssystems ermöglicht. Die erfindungsgemäße handlungsorientierte Steuerung des Datenverarbeitungssystems ersetzt die heute in der Regel eingesetzte funktionale Menüsteuerung rechnergestützter Programme. Eine funktionale Menüsteuerung bietet eine Auswahl von Funktionen, die nach abstrakten Kriterien gruppiert und in Menübäumen zugänglich sind. Solche abstrakten Kriterien sind zum Beispiel "Datei" und "Bearbeiten" für die Windows-Betriebssysteme der Firma Microsoft. Demgegenüber arbeitet die erfindungsgemäße handlungsorientierte Steuerung - auch handlungsorientierte . Navigation genannt - mit kontextsensitiven Handlungsoptionen, die in jeder Anwendungssituation des Systems binär strukturiert sind. Die binäre Struktur bezieht sich auf eine Eingabe auf der einen und eine Ausgabe von Inhalten auf der anderen Seite, bzw. auf das Verfassen oder Verändern und das Anzeigen von Datenbeständen. Vorteilhafterweise werden die binären Handlungsoptionen in Abhängigkeit des jeweiligen Handlungskontextes angepasst, das heißt es können in Abhängigkeit des jeweiligen Handlungskontextes neue Handlungsoptionen hinzu kommen und/oder andere Handlungsoptionen wegfallen. Vorteilhafterweise lässt sich die binäre handlungsorientierte Steuerung so zugleich auf alle Ausgabemedien anwenden, beispielsweise bei kleine Displays mobiler Endgeräte - wie beispielsweise in den Figuren 14 bis 18 dargestellt - oder bei einer Spracheingabe und/oder -ausgabe, wozu die Datenverarbeitungsvorrichtung dann vorteilhafterweise Mikrofon und Lautsprecher als Ein- und Ausgabeeinheiten aufweist.

Die Steuerung bzw. Navigation durch komplexe Datenbestände und deren Zusammenhänge realisiert die Mensch-Maschine-Schnittstelle des erfindungsgemäßen Datenverarbeitungssystems vorteilhafterweise mit einer graphischen Benutzerschnittstelle die zur Eingabe und/oder Wiedergabe von Zusammenhangsanfragen, Verknüpfungen, Zusammenhängen und/oder Zusammenhangsgewichtungen dient. Die graphische Benutzerschnittstelle ist dabei zur Eingabe, Änderung und/oder Wiedergabe von Informationen repräsentierenden Daten in wenigstens einem Datenbestand ausgebildet.

Die graphische Benutzerschnittstelle teilt den zur Wiedergabe seitens einer Anzeigeeinrichtung zur Verfügung stehenden Anzeigebereich in drei Bereiche, wobei in einem ersten Bereich Informationen repräsentierende Daten in wenigstens einem über wenigstens eine Datenquelle zugänglichen Datenbestand, in einem zweiten Bereich wenigstens ein wenigstens eine Information repräsentierendes Datum einer Zusammenhangsanfrage und in einem dritten Bereich wenigstens ein erfasster Zusammenhang zwischen dem wenigstens eine Information repräsentierenden Datum der Zusammenhangsanfrage und dem wenigstens eine Information repräsentierenden Datum des Datenbestandes wiedergegeben wird.

Die erfindungsgemäße Aufteilung des Anzeigebereichs in drei Teilbereiche wird nachfolgend triadische Fenstertechnik genannt. Während die aus den grafischen Oberflächen moderner Betriebssysteme bekannten Fenstertechniken entweder mit Listen-, Icon- oder Baumdiagrammen zur Darstellung der hierarchischen Struktur der Daten und Dateien eines Computersystems arbeiten, arbeitet die erfindungsgemäße triadische Fenstertechnik mit einer horizontalen oder vertikalen Dreiteilung des zur Verfügung stehenden Anzeigebereichs (Fensters).

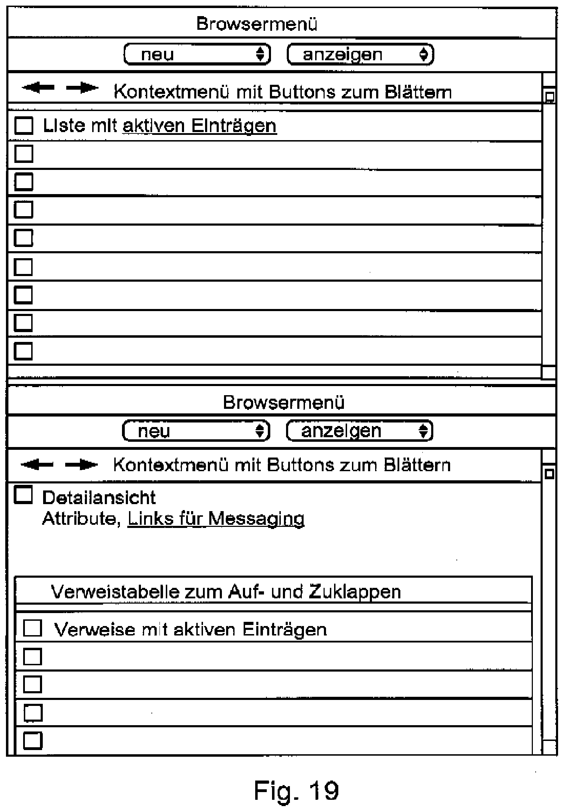

In Fig. 19 und Fig. 20 ist jeweils eine entsprechende graphische Benutzerschnittstelle dargestellt. Vorliegend in From eines prinzipielles Beispiels eines sogenannten Internet-Frontends, mit einer vertikalen Aufteilung des Anzeigebereichs. Dabei ist das erfindungsgemäße Datenverarbeitungssystem in Form eines sogenannten Webbrowsers (Fig. 19) oder eines sogenannten JAVA-Clients (Fig. 20) nutzbar.

Bei der in Fig. 19 und Fig. 20 dargestellten vertikalen Aufteilung des Anzeigebereichs befindet sich beispielsweise im oberen Drittel des Anzeigebereichs (Fensters) eine Auswahl von Inhalten als tabellarisch dargestellte Liste, im zweiten Drittel des Anzeigebereichs (Fensters) eine Detailansicht eines aus der ersten Liste ausgewählten Inhaltes und in dem letzten Drittel des Anzeigebereichs (Fensters) sämtliche mit der Auswahl verknüpften Inhalte, die beispielsweise ebenfalls in einer Liste erscheinen bzw. wiedergegeben werden. Der Anwender sieht so auf einem Blick welche Inhalte zusammengehören und kann von dort gleich weiternavigieren, um Inhalte zu suchen oder aus den Zusammenhängen Erkenntnisse abzuleiten. Die Epistemologie zeigt, dass Wissen durch Verknüpfung von Information entsteht. Das erfindungsgemäße Datenverarbeitungssystem macht somit nicht nur Informationen transparent sondern auch Wissen. Wählt der Anwender einen Inhalt aus der Liste im letzten Drittel des Fensters, wird vorteilhafterweise eine Animation gestartet, die die letzte Animation nach oben schiebt, wobei das anschließend zu sehende "triadische Fenster" den gleichen Aufbau und gleiche Logik hat. Ferner kann der Anwender auch zurücknavigieren, so dass sich die Animation entsprechend umkehrt.

Bei einer weiteren, in den Figuren nicht dargestellten vertikalen Aufteilung des Anzeigebereichs befindet sich beispielsweise im oberen Drittel des Anzeigebereichs (Fensters) das Ergebnis einer (Selektion) in Form einer Liste der Inhalte, im zweiten Drittel des Anzeigebereichs (Fensters) die Verknüpfungen bzw. die Zusammenhänge zu einem ausgewählten Inhalt aus der Liste des ersten Bereiches und im letzten Drittel des Anzeigebereichs (Fensters) eine Vorschau des ausgewählten Inhaltes (Informationen repräsentierenden Datums). Die in dem dritten Bereich des Anzeigebereichs wiedergegebene Vorschau ist mitunter besser lesbar bzw. sehbar, wenn das Größenverhältnis zwischen den ersten beiden Bereichen und dem dritten Bereich variabel einstellbar ist, sogenanntes "Splitplane". Die Steuerung bzw. Navigation ist in diesem Fall vorteilhafterweise auf die beiden ersten Bereiche des Anzeigebereichs beschränkt, während die Vorschau im dritten Bereich an gleicher Stelle einfach wechselt. Die Reihenfolge der Fensterbereiche kann je nach Implementierung variieren.

Vorteilhaft an der graphischen Benutzerschnittstelle des erfindungsgemäßen Datenverarbeitungssystems ist, dass der Anwender auf einen Blick erkennen kann welche Inhalte zusammen gehören und direkt weitersteuern bzw. -navigieren kann, um Inhalte zu suchen oder aus erfassten Zusammenhängen direkt Erkenntnisse abzuleiten. Dabei wird erfindungsgemäß eine endlose Steuerung bzw. Navigation bereitgestellt.

Die in Fig. 20 mit den Bezugszeichen 1 bis 7 gekennzeichneten Felder weisen nachfolgende Funktionalität auf:
1: Listeneinträge lassen sich per Drag and Drop in die Liste der Verweise ziehen, um eine Verknüpfung herzustellen. Ein Doppelklick öffnet die Detailansicht in einem neuen Fenster;
2: Spaltenüberschriften: Mit einem Mausklick ist ein Sortierkriterium auswählbar;
3: Scrollbalken, um Listen und Detaillisten, die im Fensterbereich nicht vollständig darstellbar sind, komplett ansehen zu können;
4: der Bereich für die Liste lässt sich mit gedrückter Maustaste verschieben und auch ganz "einklappen";
5: Detaillisteneintrag weist Scrollbalken auf, um Listen und Detaillisten, die im Fensterbereich nicht vollständig darstellbar sind, komplett ansehen zu können;
6: mit Funktionen hinterlegte Spaltenpositionen, beispielsweise führt eine E-Mail-Adresse zu einer Maske zum Schreiben einer E-Mail;
7: Verweise, können einfach gelöscht werden, indem man diese per Maus aus dem Fensterbereich zieht.

Nachfolgend werden exemplarisch im Rahmen der Nutzung des Datenverarbeitungssystems anfallende Prozesse und deren Realisierungen seitens der jeweiligen Benutzeroberfläche beschrieben.

### "Anzeigen einer Liste"

In der Anwendung der Benutzeroberfläche (GUI) wählt der Anwender aus dem Menü bzw. der Navigation zur Anzeige von Inhalten einen Menüpunkt aus, beispielsweise, um alle jüngsten Projekte zu sehen. Die Liste der auszuwählenden Menüpunkte ist ähnlich einer Bookmarkliste eines Browsers. Beim erfindungsgemäßen Datenverarbeitungssystem verweisen die Bookmarks jedoch nicht auf statische Seiten oder Listen, sondern auf dynamische Zusammenhänge. Dementspechend wird dieser Teil der Navigation von Anwender zu Anwender unterschiedlich aussehen. Vorliegend ist das Datenverarbeitungssystem als JAVA-Client realisiert.

### "Attribute hinzufügen"

Um ein neues Attribut einem Inhaltsobjekt hinzuzufügen, ruft der Anwender den Bearbeitungsmodus eines Inhaltsobjektes aus. Neben den vorhandenen Attributen findet der Benutzer ein freies Feld, in das er ein neues Attribut eintragen kann oder auf eine nebenstehenden Liste auswählen kann. Eine Adresse ist ein Objekt für das der IQser Attribute vorschlägt:

Weil im Java-Client nicht zwischen Bearbeitungs- und Ansichtsmodus unterscheiden, wird vorteilhafterweise vorgeschlagen für diese Variante, bei der Navigation "neu" die Option "Attribut hinzufügen" zu ergänzen. Wird mit externen Datenquellen gearbeitet, werden die zusätzlichen Attribute im IQser gespeichert.

Wählt der Anwender im Menu die Option "Baustein" (oder eine andere Bezeichnung) wird in der Detailansicht ein neuer leerer Baustein gezeigt. Die Bezeichnung ist ebenfalls leer. Vorteilhafterweise gibt es eine zusätzliche Auswahlbox mit den bisher definierten Bausteinen. Vorteilhafterweise überprüft das Datenverarbeitungssystem im Anschluss, ob es diese Bezeichnung für einen Baustein bereits gab und korrigiert gegebenenfalls einen Schreibfehler oder Redundanzen.

Die in den Figuren dargestellten Ausführungsbeispiele der Erfindung dienen lediglich der Erläuterung der Erfindung und sind für diese nicht beschränkend.

## Patentansprüche

1. Datenverarbeitungssystem
zur dynamischen Erfassung
von gewichteten Zusammenhängen
zwischen Informationen repräsentierenden Daten
in wenigstens einem Datenbestand,
bei welchem Datenverarbeitungssystem Mittel vorgesehen sind, die derart ausgebildet und/oder eingerichtet sind, dass
ein Zusammenhang
als Verknüpfung
zwischen
wenigstens einem wenigstens eine Information repräsentierenden Datum wenigstens eines Datenbestandes
und
wenigstens einem weiteren, wenigstens eine Information repräsentierenden Datum wenigstens eines Datenbestandes ebenfalls als ein eine Information repräsentierendes Datum erfasst wird,
wobei
die Zusammenhänge
seitens des Datenverarbeitungssystems
selbstständig ermittelt und aktualisiert gehalten werden,
und wobei
die Zusammenhänge
dynamisch als
n-zu-n-Verknüpfungen, wobei n eine natürliche ganze Zahl ist,
erfasst werden,
wobei
die Verknüpfung
durch einen syntaktischen Vergleich
der Informationen repräsentierenden Daten einer Zusammenhangsanfrage
und
der Informationen repräsentierenden Daten des wenigstens einen
Datenbestandes
erzeugt wird,
wobei
der syntaktische Vergleich
auf der Basis von
beschreibbaren
Regeln durch den Aufruf von Schlüsseln im Sinne von Attributen, welche beschreiben, welche Informationsbausteine und Datentypen für die Ermittlung von Zusammenhängen genutzt werden sollen,
erfolgt,
wobei
das Datenverarbeitungssystem eine Analyzer-Komponente aufweist, welche ausgebildet ist,
aus den Regeln einen Filter zusammenzustellen, der dazu geeignet ist, die Informationen repräsentierenden Daten des wenigstens einen Datenbestandes
nach übereinstimmenden Zeichenketten jener Schlüssel zu durchsuchen,
die
den Informationen repräsentierenden Daten
der Zusammenhangsanfrage
entsprechen.

2. Datenverarbeitungssystem nach Anspruch 1, **dadurch gekennzeichnet, dass**
dieses dazu ausgelegt ist
die Verknüpfung ferner
durch einen semantischen Vergleich
der Informationen repräsentierenden Daten einer Zusammenhangsanfrage
und
der Informationen repräsentierenden Daten des wenigstens einen Datenbestandes
zu erzeugen,
wobei
das Datenverarbeitungssystem
im Rahmen des semantischen Vergleiches
ein semantisches Netz
erzeugt,
aus dem Zusammenhänge erfassbar sind,
und wobei
das Datenverarbeitungssystem
durch semantische Vergleiche
dynamische Zusammenhänge
anhand oder mittels der Folge
von
Informationen repräsentierenden Daten von Datenbeständen und/oder
von
Nutzungen von Informationen repräsentierenden Daten von Datenbeständen
erfasst.

3. Datenverarbeitungssystem nach Anspruch 1 oder Anspruch 2, **dadurch gekennzeichnet, dass**
dieses dazu ausgelegt ist
die Zusammenhangsgewichtung
wenigstens eines
bereits als ein
wenigstens eine Information repräsentierendes Datum
in einem Datenbestand
erfassten Zusammenhangs
in Abhängigkeit
der Zusammenhangsgewichtung
eines nachfolgend
erfassten Zusammenhangs
durch Erhöhung oder Erniedrigung
zu verändern,
wobei
das Datenverarbeitungssystem
die Folge aller
aufgerufenen oder genutzten Informationen repräsentierenden Daten eines Datenbestandes
protokolliert
und wobei
eine latente Verknüpfung entsteht,
wenn zwei Informationen repräsentierende Daten eines Datenbestandes aufeinander folgen
und die Verknüpfung verstärkt wird,
wenn diese Folge mehrfach auftaucht.

4. Datenverarbeitungssystem nach einem der Ansprüche 1 bis 3, **dadurch gekennzeichnet, dass**
dieses dazu ausgelegt ist
im Rahmen der Erfassung von Zusammenhängen
zum Herstellen, Modifizieren und Auflösen von dynamischen n-zu-n-Verknüpfungen
Verknüpfungen durch manuelle Eingaben,
Verknüpfungen durch syntaktische Vergleiche
und/oder
Verknüpfungen durch semantische Vergleiche
kombinativ
miteinander
anzuwenden.

5. Datenverarbeitungssystem nach einem der Ansprüche 1 bis 4, **dadurch gekennzeichnet, dass**
dieses dazu ausgelegt ist, dass
jede dynamische Verknüpfung
systemintern
einen Wert zwischen 0 und 1
erhält,
wobei
der Wert 0 anzeigt, dass kein Zusammenhang besteht,
und
der Wert 1 einen unmittelbaren Zusammenhang anzeigt.

6. Datenverarbeitungssystem nach einem der Ansprüche 1 bis 5, **dadurch gekennzeichnet, dass**
dieses dazu ausgelegt ist, wenigstens einen erfassten Zusammenhang seitens einer optischen Anzeigeeinrichtung wiederzugeben.

7. Datenverarbeitungssystem nach Anspruch 6, **dadurch gekennzeichnet, dass**
dieses dazu ausgelegt ist, mit dem erfassten Zusammenhang dessen Gewichtung wiederzugeben.

8. Datenverarbeitungssystem nach Anspruch 6 oder Anspruch 7, **dadurch gekennzeichnet, dass**
dieses dazu ausgelegt ist, dass die Wiedergabe erfasster Zusammenhänge zumindest teilweise in auswählbarer Form erfolgt.

9. Datenverarbeitungssystem nach einem der Ansprüche 1 bis 8, **dadurch gekennzeichnet, dass** dieses
eine graphische Benutzerschnittstelle
mit einer eine handlungsorientierte Steuerung ermöglichenden graphischen Benutzeroberfläche aufweist,
wobei
die handlungsorientierte Steuerung dem Anwender kontextsensitive Handlungsoptionen,
zur Auswahl anbietet.

10. Datenverarbeitungssystem nach Anspruch 9, **dadurch gekennzeichnet, dass**
die graphische Benutzerschnittstelle weiter zur Eingabe, Änderung und/oder Wiedergabe von Informationen repräsentierenden Daten in wenigstens einem Datenbestand ausgebildet ist.

11. Datenverarbeitungssystem nach einem der Ansprüche 1 bis 10, **dadurch gekennzeichnet, dass** dieses
eine graphische Benutzerschnittstelle
zur Eingabe und/oder Wiedergabe von Verknüpfungen, Zusammenhängen und/oder Zusammenhangsgewichtungen aufweist,
wobei
der zur Wiedergabe seitens einer Anzeigeeinrichtung zur Verfügung stehende Anzeigebereich zur Steuerung eine berührungsempfindliche Fläche als Eingabeeinheit und Ausgabeeinheit aufweist,
welche insbesondere
in vier Randbereiche (A, B, C, D) und einen zentralen Bereich unterteilt ist,
wobei
eine Berührung eines ersten Bereichs die Zusammenhänge eines ausgewählten Listeneintrags aufruft,
eine Berührung eines weiteren Bereichs die zuvor angezeigte Liste aufruft,
eine Berührung eines weiteren Bereichs eine allgemeine Auswahlliste von Informationen repräsentierenden Daten aufruft,
und
eine Berührung eines weiteren Bereichs mögliche Handlungsoptionen zu einem ausgewählten Listeneintrag aufruft.

12. Datenverarbeitungssystem nach einem der Ansprüche 9 bis 11, **dadurch gekennzeichnet, dass**
die handlungsorientierte Steuerung eine binäre Grundstruktur nutzt,
die auf der einen Seite eine Eingabe von Informationen repräsentierenden Daten
und
auf der anderen Seite eine Ausgabe bzw. Wiedergabe von Informationen repräsentierenden Daten ermöglicht.

13. Datenverarbeitungssystem nach einem der Ansprüche 9 bis 12, **dadurch gekennzeichnet, dass**
dieses dazu ausgelegt ist, dass die Wiedergabe von Informationen repräsentierenden Daten in wenigstens zwei Bereichen erfolgt,
wobei
in einem ersten Bereich eine Auswahl von Informationen repräsentierenden Daten als tabellarisch dargestellte Liste,
und
in einem zweiten Bereich eine Detailansicht eines aus der Liste ausgewählten Inhaltes,
wiedergegeben werden.

14. Datenverarbeitungssystem nach Anspruch 13, **dadurch gekennzeichnet, dass**
dieses ferner dazu ausgelegt ist, dass in einem Dritten Bereich sämtliche mit der Auswahl verknüpften Informationen repräsentierenden Daten in einer Liste wiedergegeben werden.

15. Datenverarbeitungssystem nach Anspruch 13 oder Anspruch 14, **dadurch gekennzeichnet, dass**
dieses dazu ausgelegt ist, dass
im ersten Bereich
das Ergebnis einer Auswahl bzw. Selektion von Informationen repräsentierenden Daten
in Form einer Liste der Informationen repräsentierenden Daten,
im zweiten Bereich
die Verknüpfungen oder Zusammenhänge zu einem ausgewählten Informationen repräsentierenden Datum aus der Liste des ersten Bereichs, und, soweit nach Anspruch 14 vorhanden,
im Dritten Bereich
eine Vorschau des ausgewählten Informationen repräsentierenden Datums wiedergegeben werden.

16. Datenverarbeitungssystem nach Anspruch 15, **dadurch gekennzeichnet, dass**
dieses dazu ausgelegt ist, dass die Wiedergabe der aus der Selektion im ersten Bereich ausgewählten Information im zweiten Bereich als Vorschau oder als Vollansicht der Information erfolgt.

17. Datenverarbeitungssystem nach einem der Ansprüche 14 bis 16, **dadurch gekennzeichnet, dass**
dieses dazu ausgelegt ist, dass
bei einer
durch den Anwender erfolgenden
Auswahl
eines Informationen repräsentierenden Datums
aus der Liste des dritten Bereichs
eine Animation startet,
die den dritten Bereich mit dieser Animation nach oben schiebt, wobei
der anschließend zu sehende dreigeteilte Anzeigebereich den gleichen Aufbau nach Anspruch 15 und die gleiche Logik nach Anspruch 16 aufweist,
und wobei
der Anwender zurücknavigieren kann, so dass sich die Animation entsprechend umkehrt, so dass eine endlose Steuerung oder Navigation
bereitgestellt ist.

18. Datenverarbeitungssystem nach einem der Ansprüche 1 bis 17, **dadurch gekennzeichnet, dass**
dieses dazu ausgelegt ist, dass die Wiedergabe erfasster Zusammenhänge zumindest teilweise in auswählbarer Form erfolgt.

19. Datenverarbeitungsvorrichtung zur elektronischen Verarbeitung von Daten, mit
einer Kontroll- und/oder Recheneinheit,
einer Eingabeeinheit und
einer Ausgabeeinheit
wobei
die Datenverarbeitungsvorrichtung
ein Datenverarbeitungssystem nach einem der Ansprüche 1 bis 18 umfasst und ferner
**dadurch gekennzeichnet ist, dass**
die Eingabeeinheit und die Ausgabeeinheit durch eine berührungsempfindliche Fläche, insbesondere ein Touchscreen, ausgebildet ist,
welche
die Steuerung zur Eingabe und/oder Wiedergabe von Verknüpfungen, Zusammenhängen und/oder Zusammenhangsgewichtungen der graphischen Benutzeroberfläche
der graphischen Benutzerschnittstelle realisiert.

20. Datenverarbeitungsvorrichtung nach Anspruch 19, **dadurch gekennzeichnet, dass**
die berührungsempfindliche Fläche
zur Realisierung der Steuerung, zur Eingabe und/oder Wiedergabe von Verknüpfungen, Zusammenhängen und/oder Zusammenhangsgewichtungen
in fünf Bereiche unterteilt ist,
wobei
eine zentrale Fläche von vier Flächen (A, B, C, D) umgeben ist,
und dazu ausgestaltet ist,
Bewegungen auf der berührungssensitiven Fläche
in Bewegungen einer Positionsmarke auf der berührungssensitiven Fläche umzusetzen,
wobei
eine Bewegung nach unten bewirkt, dass die Listeneinträge auf der berührungssensitiven Fläche nacheinander von oben nach unten ausgewählt werden,
eine Bewegung von unten nach oben bewirkt, dass die Listeneinträge auf der berührungssensitiven Fläche nacheinander von unten nach oben ausgewählt werden,
und/oder
bei verbleibender Berührung die Bewegung auf der berührungssensitiven Fläche (C, D) fortgesetzt wird,
wobei
bei verbleibender Berührung auf der berührungssensitiven Fläche (B) die Informationen repräsentierenden Daten angezeigt werden, die mit dem aktuellen Listeneintrag verknüpft sind,
und/oder
wobei bei verbleibender Berührung auf der berührungssensitiven Fläche (A) die zuletzt aufgerufene Liste angezeigt wird.

21. Datenverarbeitungsvorrichtung nach Anspruch 20, **gekennzeichnet durch** eine verzögerte Ausführung der bei verbleibender Berührung auf der berührungssensitiven Fläche (B) erfolgenden Anzeige von Informationen repräsentierenden Daten, die mit dem aktuellen Listeneintrag verknüpft sind.

22. Datenverarbeitungsvorrichtung nach Anspruch 20 oder Anspruch 21, **dadurch gekennzeichnet, dass**
diese ausgebildet ist, die Geste einer kurzen Berührung in den fünf Bereichen (A, B, C, D) zu erkennen und als Auswahl zu nutzen.

23. Datenverarbeitungsvorrichtung nach einem der Ansprüche 19 bis 22, **dadurch gekennzeichnet, dass**
diese als ein in Mobilfunknetzen nutzbares bzw. betreibbares mobiles Endgerät ausgebildet ist.

## Claims

1. A data processing system
for dynamically computing
weighted relations
between data representing information
in at least one data inventory,
in which data processing system means are provided which are configured and/or adapted such that
an relation
as link
between
at least one data item representing at least one information of at least one data inventory
and
at least one other data item representing at least one information of at least one data inventory
will also be gathered as a data item representing an information,
wherein
the relations
will be automatically determined and kept updated
by the data processing system,
and wherein
the relations
will by dynamically determined
as n-to-n links, wherein n is a natural integer,
wherein
the link
will be generated
by means of a syntactic comparison
of the data representing the information of an relation request
and
the data representing the information of the at least one data inventory, wherein
the syntactic comparison
is carried out
on the base of
describable
rules by calling keys in the sense of attributes which describe which information modules and data types shall be used for retrieving relations,
wherein
the data processing system comprises an analyser component which is configured
for composing a filter from the rules, which filter is appropriate to search the data representing the information of the at least one data inventory for matching character strings of those keys which
correspond to the data representing information of the relation request.

2. A data processing system according to claim 1, **characterized in that** this one is designed
to generate
the link furthermore
by means of a semantic comparison
of the data representing the information of an relation request and
the data representing the information of the at least one data inventory,
wherein
the data processing system
generates
a semantic net
within the scope of the semantic comparison,
from which semantic net relations can be determined,
and wherein
the data processing system
determines
dynamic relations
by means of semantic comparisons
on the base of or by means of the sequence
of data representing information of data inventories
and/or
of utilizations of data representing information of data inventories.

3. A data processing system according to claim 1 or claim 2, **characterized in that** this one is designed
for changing
the relation weight
of at least one
relation
that has already been computed
as a data item representing at least one information item in a data inventory
in dependence on
the relation weight
of a subsequently
gathered relation
by increasing or decreasing,
wherein
the data processing system
records
the sequence of
all called or used data representing information of a data inventory and wherein
a latent link will be generated,
if two data representing information of a data inventory
succeed one another
and the link will be intensified,
if this sequence appears several times.

4. A data processing system according to any one of the claims 1 to 3, **characterized in that**
this one is designed
for producing, modifying and resolving dynamic n-to-n links
within the scope of computing relations
by applying
in a combining manner
links with each other by means of manual entries,
links with each other by means of syntactic comparisons
and/or
links with each other by means of semantic comparisons.

5. A data processing system according to any one of the claims 1 to 4, **characterized in that**
this one is designed, such that
each dynamic link
will get
a value comprised between 0 and 1
within the system,
wherein
the value 0 indicates that there is no relation
and the value 1 indicates that there is a direct relation.

6. A data processing system according to any one of the claims 1 to 5, **characterized in that**
this one is designed for reproducing at least one gathered relation by means of an optical display device.

7. A data processing system according to claim 6, **characterized in that**
this one is designed for reproducing the weighting of the gathered relation together with the relation.

8. A data processing system according to claim 6 or claim 7, **characterized in that** this one is designed such that the reproduction of gathered relations will at least partially take place in a selectable manner.

9. A data processing system according to any one of the claims 1 to 8, **characterized in that** this one
comprises a graphic user interface
having a graphic user surface that allows an action-oriented control,
wherein
the action-oriented control offers the user context sensitive options for action to be selected.

10. A data processing system according to claim 9, **characterized in that**
the graphic user interface is further configured for entering, changing and/or reproducing data representing information in at least one data inventory.

11. A data processing system according to any one of the claims 1 to 10, **characterized in that** this one
comprises a graphic user interface
for entering and/or displaying links, relations and/or relation weights,
wherein
the display zone provided by a display device for the output comprises a touch-sensitive surface as input unit and output unit for controlling,
which display zone is in particular
divided into four peripheral areas (A, B, C, D) and a central area,
wherein
touching a first area calls the relations of a selected list entry,
touching another area calls the previously displayed list,
touching another area calls a general selection list of data representing information,
and
touching another area calls possible options for action with respect to a selected list entry.

12. A data processing system according to any one of the claims 9 to 11, **characterized in that**
the action-oriented control uses a binary base structure
which
allows entering data representing information, on the one hand
and
an output or reproduction of data representing information, on the other hand.

13. A data processing system according to any one of the claims 9 to 12, **characterized in that**
this one is designed such that the display of data representing information takes place in at least two areas,
wherein
in a first area a selection of data representing information is reproduced as a list in tabular form,
and
in a second area a detailed view of a content selected from the list is reproduced.

14. A data processing system according to claim 13, **characterized in that** this one is furthermore designed such that in a third area all the data representing information which are linked with the selection will be reproduced in a list.

15. A data processing system according to claim 13 or claim 14, **characterized in that**
this one is designed such that
in the first area
the result of a selection of data representing information will be displayed
in form of a list of the data representing information,
in the second area
the links or relations with respect to a selected data item representing information from the list of the first area will be displayed,
and as far as existent according to claim 14,
in the third area
a preview of the selected data item representing information will be displayed.

16. A data processing system according to claim 15, **characterized in that** this one is designed such that displaying the information item selected in the first area will take place as preview or as full view of the information item in the second area.

17. A data processing system according to any one of the claims 14 to 16, **characterized in that**
this one is designed such that
in case of a selection
of a data item representing information
from the list of the third area
by the user,
an animation will start
which pushes the third area with this animation upwards,
wherein
the tripartite display area which can be seen afterwards comprises the same structure according to claim 15 and the same logic according to claim 16,
and wherein
the user can navigate back, such that the animation will reverse such that an endless control or navigation is provided.

18. A data processing system according to any one of the claims 1 to 17, **characterized in that**
this one is designed such that the diosplay of computedrelations will at least partially take place in a selectable manner.

19. A data processing device for the electronic processing of data, comprising
a control and/or computing unit,
an input unit and
an output unit
wherein
the data processing device
includes a data processing system according to any one of the claims 1 to 18 and is furthermore **characterized in that**
the input unit and the output unit are formed by a touch-sensitive surface, in particular a touch screen,
which
realizes the control of the input and/or the reproduction of links, relations and/or relation weights of the graphic user surface of the graphic user interface.

20. A data processing device according to claim 19, **characterized in that** the touch-sensitive surface
for realising the control, the input and/or the reproduction of links, relations and/or relation weights
is divided into five areas,
wherein
a central surface is surrounded by four surfaces (A, B, C, D),
and is configured for
turning movements on the touch-sensitive surface into movements of a cursor on the touch-sensitive surface,
wherein
a movement downwards causes the list entries on the touch-sensitive surface to be subsequently selected top down,
a movement from bottom to top causes the list entries on the touch-sensitive surface to be subsequently selected from bottom to top,
and/or
in case of a remaining touch the movement on the touch-sensitive surface (C, D) will be continued,
wherein
in case of a remaining touch on the touch-sensitive surface (B) the data representing information which are linked to the current list entry will be displayed,
and/or
wherein in case of a remaining touch on the touch-sensitive surface (A) the most recently called list will be displayed.

21. A data processing device according to claim 20, **characterized by** a delayed realization of the display of data representing information which are linked to the current list entry that takes place in case of a remaining touch on the touch-sensitive surface (B).

22. A data processing device according to claim 20 or claim 21, **characterized in that**
this one is configured for recognizing the gesture of a short touch in the five areas and using it as a selection.

23. A data processing device according to any one of the claims 19 to 22, **characterized in that**
this one is designed as a mobile terminal that can be used or operated in mobile radio networks.

## Revendications

1. Système de traitement de données
destiné à la saisie dynamique
de relations pondérées
entre des données représentant des informations
dans au moins une base de données,
dans lequel système de traitement de données des moyens sont prévus, qui sont configurés et/ou adaptés de sorte qu'
une relation
en tant que lien
entre
au moins une donnée représentant au moins une information d'au moins une base de données
et
au moins une autre donnée représentant au moins une information d'au moins une base de données
sera aussi saisie comme une donnée représentant une information,
dans lequel
les relations
sont déterminées et gardées à jour de manière autonome
par le système de traitement de données,
et dans lequel
les relations
sont déterminées
de manière dynamique comme
des liens n-à-n, n étant un nombre entier naturel,
dans lequel
le lien
sera généré
par moyen d'une comparaison syntactique
des données représentant des informations d'une demande de relation
et
des données représentant des informations de l'au moins une base de données,
dans lequel
la comparaison syntactique
est effectuée
sur la base de
règles descriptibles en appelant des codes en termes d'attributs, qui décrivent quels modules d'information et quels types de données doivent être utilisés pour déterminer des relations,
dans lequel
le système de traitement de données comprend une composante d'analyseur, qui est configurée pour
composer un filtre à partir des règles, lequel filtre est approprié pour parcourir les données représentant des informations de l'au moins une base de données
en recherchant des chaînes de caractères concordantes de ces codes, qui
correspondent aux données représentant des informations de la demande de relation.

2. Système de traitement de données selon la revendication 1, **caractérisé en ce que**
celui est configuré pour
générer
le lien en outre
par moyen d'une comparaison sémantique
des données représentant des informations d'une demande de relation et
des données représentant des informations de l'au moins une base de données,
dans lequel
le système de traitement de données
génère
un réseau sémantique
dans le cadre de la comparaison sémantique,
à partir duquel réseau sémantique il est possible de saisir des relations, et dans lequel
le système de traitement de données
saisit
des relations dynamiques
par moyen des comparaisons sémantiques
sur la base de ou par moyen de la séquence
de
données représentant des informations de bases de données
et/ou
d'utilisations de données représentant des informations de bases de données.

3. Système de traitement de données selon la revendication 1 ou la revendication 2, **caractérisé en ce que**
celui est configuré pour
changer
la pondération de relation
d'au moins une
relation, qui est déjà saisie
comme une donnée représentant au moins une information
dans une base de données
en fonction de
la pondération de relation
d'une relation saisie
dorénavant
par augmentation ou par diminution,
dans lequel
le système de traitement de données
enregistre
la suite de toutes
les données représentant des informations d'une base de données, qui ont été appelées ou utilisées
et dans lequel
un lien latent sera formé,
si deux données représentant des informations d'une base de données se suivent,
et le lien sera renforcé
si cette suite apparaît plusieurs fois.

4. Système de traitement de données selon l'une des revendications 1 à 3, **caractérisé en ce que**
celui est configuré pour
appliquer
d'une manière combinée,
et dans le cadre de saisir des relations,
des relations l'une avec l'autre par moyen d'entrées manuelles,
des relations l'une avec l'autre par moyen de comparaisons syntactiques et/ou
des relations l'une avec l'autre par moyen de comparaisons sémantiques pour produire, modifier et dissoudre des liens n-à-n dynamiques.

5. Système de traitement de données selon l'une des revendications 1 à 4, **caractérisé en ce que**
celui est configuré de sorte que
chaque lien dynamique
reçoit
une valeur comprise entre 0 et 1
à l'intérieur du système,
dans lequel
la valeur 0 indique qu'il n'y a aucune relation,
et
la valeur 1 indique qu'il y a une relation directe.

6. Système de traitement de données selon l'une des revendications 1 à 5, **caractérisé en ce que**
celui-ci est configuré pour reproduire au moins une relation saisie par moyen d'un dispositif d'affichage optique.

7. Système de traitement de données selon la revendication 6, **caractérisé en ce que**
celui-ci est configuré pour reproduire la pondération de la relation ensemble avec la relation saisie.

8. Système de traitement de données selon la revendication 6 ou la revendication 7, **caractérisé en ce que**
celui-ci est configuré de sorte que la reproduction de relations saisies se fait au moins partiellement d'une façon sélectionnable.

9. Système de traitement de données selon l'une des revendications 1 à 8, **caractérisé en ce que** celui-ci
comprend une interface utilisateur graphique
ayant une surface utilisateur graphique, qui permet une commande adaptée à l'activité,
dans lequel
la commande adaptée à l'activité offre à l'utilisateur des options d'activité contextuelles
à sélectionner.

10. Système de traitement de données selon la revendication 9, **caractérisé en ce que**
l'interface utilisateur graphique est configurée pour entrer, changer et/ou reproduire des données représentant des informations dans au moins une base de données.

11. Système de traitement de données selon l'une des revendications 1 à 10, **caractérisé en ce que** celui-ci
comprend une interface utilisateur graphique
pour entrer et/ou reproduire des liens, des relations et/ou des pondérations de relation,
dans lequel
la zone d'affichage fournie par un dispositif d'affichage comprend une surface tactile comme unité d'entrée et unité de sortie pour la commande,
laquelle zone d'affichage est notamment
divisée en
quatre zones périphériques (A, B, C, D) et une zone centrale,
dans lequel
le contact avec une première zone appelle les relations d'une entrée de liste sélectionnée,
le contact avec une autre zone appelle la liste précédemment affichée,
le contact avec une autre zone appelle une liste de sélection générale de données représentant des informations,
et
le contact avec une autre zone appelle des options d'activité possibles par rapport à une entrée de liste sélectionnée.

12. Système de traitement de données selon l'une des revendications 9 à 11, **caractérisé en ce que**
la commande adaptée à l'activité utilise une structure de base binaire,
qui permet une entrée de données représentant des informations, d'une part et
une sortie ou une reproduction de données représentant des informations, d'autre part.

13. Système de traitement de données selon l'une des revendications 9 à 12, **caractérisé en ce que**
celui-ci est configuré de sorte que la reproduction de données représentant des informations a lieu dans au moins deux zones,
dans lequel
dans une première zone, une sélection de données représentant des informations est reproduite comme une liste représentée sous forme de tableau,
et
dans une deuxième zone, une vue détaillée d'un contenu sélectionné dans la liste est reproduite.

14. Système de traitement de données selon la revendication 13, **caractérisé en ce que**
celui-ci est en outre configuré de sorte que dans une troisième zone toutes les données représentant des informations, qui sont liées à la sélection, sont reproduites dans une liste.

15. Système de traitement de données selon la revendication 13 ou la revendication 14, **caractérisé en ce que**
celui-ci est configuré de sorte que
dans la première zone
le résultat d'une sélection de données représentant des informations sera reproduit
sous forme d'une liste des données représentant des informations,
dans la deuxième zone
les liens ou les relations par rapport à une donnée représentant des informations sélectionnée dans la liste de la première zone seront reproduits, et, s'il y en a selon la revendication 14,
dans la troisième zone
une prévue de la donnée représentant des informations sélectionnée sera reproduite.

16. Système de traitement de données selon la revendication 15, **caractérisé en ce que**
celui-ci est configuré de sorte que la reproduction de l'information sélectionnée dans la sélection dans la première zone se faira comme prévue ou comme vue complète de l'information dans la deuxième zone.

17. Système de traitement de données selon l'une des revendications 14 à 16, **caractérisé en ce que**
celui-ci est configuré de sorte que
dans le cas
d'une sélection
d'une donnée représentant des informations
dans la liste de la troisième zone
par l'utilisateur,
une animation commencera,
qui pousse la troisième zone avec cette animation vers le haut,
dans lequel
la zone d'affichage divisée en trois parties, qui est visible après, comprend la même structure que celle selon la revendication 15 et la même logique que celle selon la revendication 16,
et dans lequel
l'utilisateur peut naviguer en arrière, de sorte que l'animation se renverse de manière correspondante de sorte qu'une commande ou une navigation sans fin est créée.

18. Système de traitement de données selon l'une des revendications 1 à 17, **caractérisé en ce que**
celui-ci est configuré de sorte que la reproduction de relations saisies se fait au moins partiellement d'une façon sélectionnable.

19. Dispositif de traitement de données pour traiter des données électroniquement, comprenant
une unité de contrôle et/ou de compte,
une unité d'entrée et
une unité de sortie,
dans lequel
le dispositif de traitement de données
comprend un système de traitement de données selon l'une des revendications 1 à 18, et il est en outre **caractérisé en ce que**
l'unité d'entrée et l'unité de sortie sont formées par une surface tactile, notamment par un écran tactile,
qui
réalise la commande de l'entrée et/ou de la reproduction de liens, de relations et/ou de pondérations de relation de la surface utilisateur graphique de l'interface utilisateur graphique.

20. Dispositif de traitement de données selon la revendication 19, **caractérisé en ce que**
la surface tactile
est divisée en cinq parties
pour réaliser la commande, l'entrée et/ou de la reproduction de liens, de relations et/ou de pondérations de relation,
dans lequel
une surface centrale est entourée par quatre surfaces (A, B, C, D) et elle est configurée pour
convertir des mouvements sur la surface tactile en mouvements d'une marque de position sur la surface tactile,
dans lequel
un mouvement vers le bas provoque que les entrées de liste sur la surface tactile sont sélectionnées l'une après l'autre du haut vers le bas,
un mouvement du bas vers le haut provoque que les entrées de liste sur la surface tactile sont sélectionnées l'une après l'autre du bas vers le haut,
et/ou
dans le cas d'un contact restant, le mouvement sur la surface tactile (C, D) sera continué,
dans lequel
dans le cas d'un contact restant sur la surface tactile (B), les données représentant des informations, qui sont liées à l'entrée de liste actuelle, seront affichées,
et/ou
dans le cas d'un contact restant sur la surface tactile (A), la liste récemment appelée sera affichée.

21. Dispositif de traitement de données selon la revendication 20, **caractérisé par** une réalisation retardée de l'affichage de données représentant des informations, qui sont liées à l'entrée de liste actuelle, dans le cas d'un contact restant sur la surface tactile (B).

22. Dispositif de traitement de données selon la revendication 20 ou la revendication 21, **caractérisé en ce que**
celui-ci est configuré pour reconnaître le geste d'un contact court dans les cinq zones (A, B, C, D) et pour l'utiliser comme une sélection.

23. Dispositif de traitement de données selon l'une des revendications 19 à 22, **caractérisé en ce que**
celui-ci a la forme d'un terminal mobile utilisable ou fonctionnant dans des réseaux radio mobile.
